# EUROPEAN PATENT SPECIFICATION

(11) **EP 3 098 158 B1**
(45) Date of publication and mention of the grant of the patent: **03.04.2019**
(21) Application number: 14871330.8
(22) Date of filing: 16.12.2014
(51) Int. Cl.: B63H 5/16, B63H 5/08

(54) **STERN DUCT, STERN ATTACHMENT, METHOD OF DESIGNING STERN DUCT, AND SHIP EQUIPPED WITH STERN DUCT**
ACHTERKANAL, ACHTERBEFESTIGUNG, VERFAHREN ZUR KONSTRUKTION EINES ACHTERKANALS UND MIT ACHTERKANAL AUSGESTATTETES SCHIFF
CONDUIT DE POUPE, FIXATION DE POUPE, PROCÉDÉ PERMETTANT DE CONCEVOIR UN CONDUIT DE POUPE ET NAVIRE ÉQUIPÉ D'UN CONDUIT DE POUPE

(30) Priority: 16.12.2013 JP 2013259664; 23.05.2014 JP 2014107429
(43) Date of publication of application: 30.11.2016
(73) Proprietor: National Institute of Maritime, Port and Aviation Technology, Tokyo 181-0004 (JP)
(72) Inventor: KAWASHIMA, Hideki, Mitaka-shi Tokyo 181-0004 (JP); SAKAMOTO, Nobuaki, Mitaka-shi Tokyo 181-0004 (JP); KUME, Kenichi, Mitaka-shi Tokyo 181-0004 (JP); FUJISAWA, Junichi, Mitaka-shi Tokyo 181-0004 (JP); KISHIMOTO, Masahiro, Mitaka-shi Tokyo 181-0004 (JP); ICHINOSE, Yasuo, Mitaka-shi Tokyo 181-0004 (JP); KASAHARA, Yoshikazu, Mitaka-shi Tokyo 181-0004 (JP); KANEKO, Azumi, Mitaka-shi Tokyo 181-0004 (JP); HAMADA, Tatsuya, Mitaka-shi Tokyo 181-0004 (JP); WAKO, Daisuke, Mitaka-shi Tokyo 181-0004 (JP); UTO, Shotaro, Mitaka-shi Tokyo 181-0004 (JP); ARAKI, Motoki, Mitaka-shi Tokyo 181-0004 (JP); HINATSU, Munehiko, Mitaka-shi Tokyo 181-0004 (JP); KAWANAMI, Yasutaka, Mitaka-shi Tokyo 181-0004 (JP)
(74) Representative: Körfer, Thomas
(86) International application number: PCT/JP2014/006281
(87) International publication number: WO 2015/093048

(56) References cited:
- DE-C1- 3 633 689
- JP-A- H09 175 488
- JP-A- 2008 137 462
- JP-A- 2013 132 924
- JP-A- 2013 139 175
- JP-U- S58 149 293
- KR-A- 20110 083 998
- KR-A- 20110 083 998
- KR-A- 20120 068 158
- KR-A- 20120 068 223
- KR-A- 20120 068 223
- KR-A- 20130 125 628
- KR-U- 20120 007 854

## Description

### [TECHNICAL FIELD]

The present invention relates to a stern duct mounted on a stern of a ship's hull, a stern attachment, a design method of the stern duct, and a ship provided with the stern duct.

### [BACKGROUND TECHNIQUE]

As one of energy saving devices, a stern duct is mounted on a front portion of a propeller mounted on a stern of a ship's hull.

Patent document 1 proposes a ship on which an arc duct is mounted. This arc duct is placed in front of the propeller and higher than a center position of stern longitudinal vortex generated around a stern portion. This ship includes main fins extending in a radial direction of the propeller between both lower ends of the duct and a side surface of the stern portion. Each of the main fins is inclined such that its front is located higher than its rear (especially paragraphs (0014) to (0016)) .

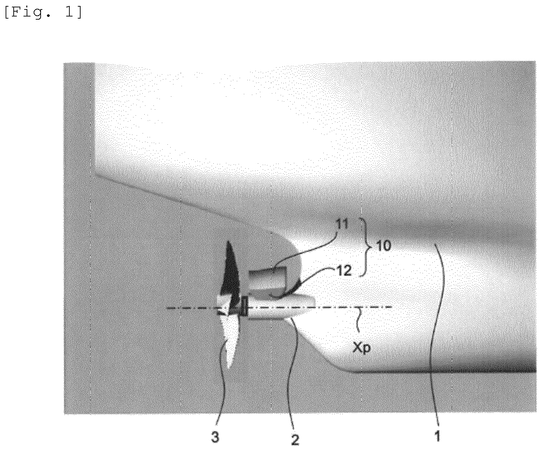

Patent document 2 discloses a semi-arc stern duct only including a cylindrical upper half portion (especially Fig. 1 and paragraph (0018)).

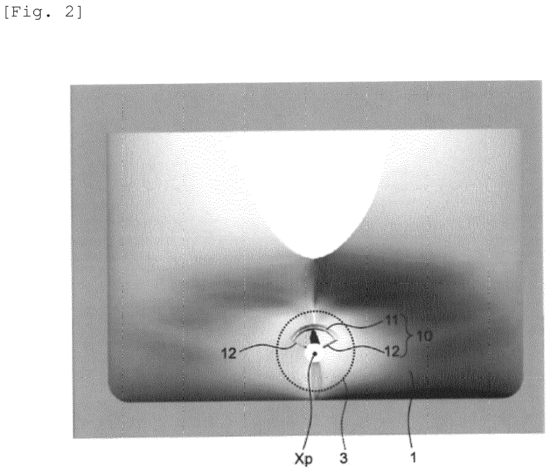

Patent document 3 proposes a duct device including an outer shell of a substantially semi-circular truncated shape obtained by substantially half-cutting a substantially circular truncated shape cylinder at a plane including a center axis, and two connection plates which fix an outer shell to the stern portion. The outer shell is placed such that a smaller-diameter portion of the outer shell is oriented toward the propeller and the outer shell is opposed to an upper half portion of the propeller (especially Figs. 1 and 2 and paragraph (0020)).

Patent document 4 discloses a duct for a ship in which a first plate body is curved into an arc shape and an end of the first plate body is provided with a straight second plate body (especially paragraph (0006)).

### [PRIOR ART DOCUMENTS]

### [PATENT DOCUMENTS]

[Patent Document 1] Japanese Patent Application Laid-open No.2011-178222
[Patent Document 2] Japanese Patent Application Laid-open No.2006-347285
[Patent Document 3] Japanese Patent Application Laid-open No.2008-137462
[Patent Document 4] Japanese Patent Application Laid-open No.2008-308023
[Patent Document 5] Korean patent Application Publication Number: KR10-2012-0068223

### [SUMMARY OF THE INVENTION]

### [PROBLEM TO BE SOLVED BY THE INVENTION]

Especially the arc duct in patent document 1 is mounted symmetrically with respect to a center line in a vertical direction of the propeller in a state where the ship's hull is forwardly viewed from backward. Patent document 1 focuses attention on a problem that, in the semi-circular duct, a problem that a thrust force is mainly generated at an upper portion and a thrust force is not generated at a side surface portion, i.e., a problem that a thrust force cannot be obtained at the side surface portion of the semi-circular duct, and the side surface portion of the semi-circular duct becomes a cause of increase in resistance (paragraph (0006)).

To solve this problem, the main fins are provided and an auxiliary thrust force is obtained from downflow. Although the arc duct having a smaller angle than that of the semi-circular is illustrated in the drawing of patent document 1, there is no description concerning a center angle of the arc, and in the case of the illustrated duct, it seems that the center angle is about 145°. The center angle is not determined while taking, into account, a hydrodynamic force distribution in a propulsion direction of the ship's hull which acts on a surface of the duct.

The semi-arc stern duct in patent document 2 is also mounted symmetrically with respect to a center line in the vertical direction of the propeller in a state where the ship's hull is forwardly viewed from backward. According to patent document 2, a reduction rate of power is enhanced, and energy is further saved as compared with a conventional case where a stern fin, a stern duct and a rudder fin are individually provided. Hence, in patent document 2, mutual relations between the stern fin, the stern duct and the rudder fin are necessary, and the stern duct is provided to decelerate the speed of downflow which is stemmed by the stern fin flowing into the propeller (especially paragraph (0016)).

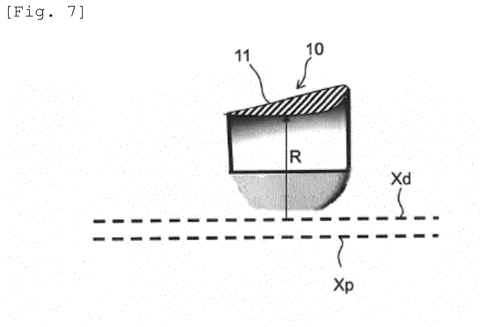

The substantially semi-circular truncated shaped outer shell in patent document 3 is also mounted symmetrically with respect to the center line in the vertical direction of the propeller in a state where the ship's hull is forwardly viewed from backward. Although patent document 3 discloses the duct device provided with the outer shell having a center angle smaller than 180°, patent document 3 only discloses that the center angle becomes 150° under such a condition that a center axis of the outer shell and a rotation axis of the propeller match with each other (Fig. 7(A) and paragraph (0037)). Further, the center angle is not determined while taking into account a hydrodynamic force distribution in a propulsion direction of the ship's hull which acts on the surface of the duct.

Further, the first plate body which is curved into an arc in patent document 4 is also mounted symmetrically with respect to the center line in the vertical direction of the propeller in a state where the ship's hull is forwardly viewed from backward. Although the arc center angle is not specifically described in patent document 4, it seems that the illustrated duct has a center angle exceeding 180° (especially Fig. 2 and paragraph (0026)).

Patent document 5 discloses a duct structure for a ship,the duct is provided with divided path according to axial perimeter of propeller.

Hence, it is an object of the present invention to provide a stern duct, a stern attachment, a design method of the stern duct and a ship provided with the stern duct capable of enhancing hull efficiency without increasing resistance ship's hull even if a duct body is added to the ship's hull.

Further, it is another object of the present invention to provide a stern duct, a stern attachment, a design method of the stern duct and a ship provided with the stern duct capable of enhancing a thrust deduction factor and relative rotative efficiency, and capable of reducing an effective wake fraction.

### [MEANS FOR SOLVING THE PROBLEM]

According to a downstream corresponding to the present invention described in claim 1, in a stern duct mounted in front of a propeller mounted on a stern of a ship's hull, wherein a duct body is formed into an arc shape of an angle range from 90° to 140°, a radius of a rear end arc portion formed on a rear end of the duct body is set to 50% or less and 20% or more of a radius of the propeller, and the duct body is mounted on the stern by support means such that a duct center line of the duct body inclines in a rotation direction of the propeller with respect to a propeller center line in a vertical direction of the propeller in a state where the ship's hull is forwardly viewed from backward. According to the invention described in claim 1, since the duct body is formed into the arc shape of the angle range from 90° to 140°, even if the duct body is added to the ship's hull, it is possible to enhance the hull efficiency without increasing the resistance of the ship's hull. Further since the radius of the rear end arc portion formed on the rear end of the duct body is set to 50% or less and 20% or more of the radius of the propeller, interference between the duct body and the propeller becomes large, and it is possible to make the effective wake fraction small. Further the duct body is mounted such that the duct center line inclines with respect to the rotation direction of the propeller with respect to the propeller center line in the vertical direction of the propeller. As compared with a case there the duct center line does not incline, it is possible to make the effective wake fraction smaller.

In the invention described in claim 2, an inclination angle of the propeller in the rotation direction is set to an angle range larger than 0° and 60° or less in the rotation direction of the propeller with respect to a part of the propeller center line located higher than a center axis of the propeller. According to the invention described in claim 2, since the inclination angle in the rotation direction of the propeller of the duct center line of the duct body is set larger than 0° and 60° or less, the duct body and the support means can face the region where the reduction rate of delivered power is high. Therefore, it is possible to provide a stern duct having a high energy-saving effect.

The invention described in claim 3 provides a stern duct mounted in front of a propeller mounted on a stern of a ship's hull, wherein a duct body is formed into an arc shape of an angle range from 180° to 270°, a radius of a rear end arc portion formed on a rear end of the duct body is set to 50% or less and 20% or more of a radius of the propeller, and the duct body is mounted on the stern by support means such that a duct center line of the duct body inclines in a rotation direction of the propeller with respect to a propeller center line in a vertical direction of the propeller in a state where the ship's hull is forwardly viewed from backward. According to the invention described in claim 3, since the duct body is formed into an arc shape of an angle range from 180° to 270°, even if the duct body is added to the ship's hull, it is possible to enhance the hull efficiency without increasing the resistance of the ship's hull. Further, since the radius of the rear end arc portion formed on the rear end of the duct body is set to 50% or less and 20% or more of the radius of the propeller, the interference between the duct body and the propeller increases, and the effective wake fraction can be made small. The duct center line of the duct body inclines with respect to the rotation direction of the propeller with respect to the propeller center line in the vertical direction of the propeller. Therefore, as compared with a case where there is no inclination, it is possible to enhance the thrust deduction factor or the relative rotative efficiency, and to further reduce the effective wake fraction.

In the invention described in claim 4, an inclination angle of the propeller in the rotation direction is set to an angle range of 30° or more and 60° or less in the rotation direction of the propeller with respect to a part of the propeller center line located higher than a center axis of the propeller. According to the invention described in claim 4, the inclination angle of the propeller in the rotation direction of the duct center line of the duct body is set to an angle range of 30° or more and 60° or less. Therefore, the duct body and the support means can face the region where the reduction rate of delivered power is high, it is possible to provide the stern duct having the high energy-saving effect.

In the invention described in claim 5, a cross section of the duct body in its longitudinal direction is formed into a wing shape which is convex inward of the duct body. According to the invention described in claim 5, by utilizing the propulsion direction component (thrust component) of the locking projection generated by the wing shape, it is possible to enhance the thrust deduction factor and the propulsive efficiency.

In the invention described in claim 6, the radius of the rear end arc portion is made smaller than a radius of a front end arc portion formed on a front end. According to the invention described in claim 6, average flow speed which flows into the propeller at a location downstream of the duct body is made slow. According to this, the effective wake fraction can be made small, and it is possible to increase the thrust component on the front end side of the duct body, and to enhance the propulsion force.

In the invention described in claim 7, a phantom center axis of the duct body matches with a rotation center axis of the propeller. According to the invention described in claim 7, design and installation become easy.

In the invention described in claim 8, a phantom center axis of the duct body is offset from a rotation center axis of the propeller. According to the invention described in claim 8, it is possible to offset the duct body to a position where a thrust force is enhanced corresponding to asymmetric flow generated by the ship's hull or the propeller.

In the invention described in claim 9, a phantom center axis of the duct body is inclined with respect to a rotation center axis of the propeller in a state where the ship's hull is viewed from side. According to the invention described in claim 9, the duct body such that a thrust force is further enhanced utilizing the flow of the stern portion.

In the invention described in claim 10, the duct body is mounted, through a strut as the support means, on a stern tube of the ship's hull or an end of the stern which covers the stern tube. According to the invention described in claim 10, it is easy to install the duct body, and to place the duct body at appropriate position especially with respect to the propeller.

In the invention described in claim 11, a cross section of the strut is formed into a wing shape which is convex inward of the duct body. According to the invention described in claim 11, it is possible to utilize the propulsion direction component (thrust component) of a lifting power generated by the wing shape also in the strut.

In the invention described in claim 12, the strut is formed into a twisted shape, thereby bringing a flow heading for the propeller into a counterflow with respect to the rotation direction of the propeller. According to the invention described in claim 12, it is possible to enhance the propulsion force of the propeller.

In the invention described in claim 13, a duct body-side front-to-rear width of the strut is formed larger than a stern-side front-to-rear width of the strut. According to the invention described in claim 13, it is possible to reduce the resistance of the struts and to enhance the propulsion force.

The invention described in claim 14 provides a stern attachment mounted in front of a propeller mounted on a stern of a ship's hull, wherein a pair of struts which support an arc phantom duct body are mounted on the stern such that an angle between the pair of struts falls in an angle range from 180° to 270°, a radius of a phantom rear end arc portion formed on a rear end of the phantom duct body is set to 50% or less and 20% or more of a radius of the propeller, and a strut center line between the pair of struts inclines in a rotation direction of the propeller with respect to a propeller center line in a vertical direction of the propeller in a state where the ship's hull is forwardly viewed from backward. According to the invention described in claim 14, the pair of struts are mounted on the stern without mounting the duct body such that the angle between the pair of struts falls within the angle range from 180° to 270°. According to this, even if the struts are added to the ship's hull, it is possible to improve the hull efficiency without increasing the resistance of the ship's hull. Further, since the radius of the rear end arc portion formed on the rear end of the duct body is set to 50% or less and 20 % or more of the radius of the propeller, the interference between the stern attachment and the propeller increases, and the effective wake fraction can be made small. The strut center line of the pair of struts inclines with respect to the rotation direction of the propeller with respect to the propeller center line. Therefore, as compared with a case where there is no inclination, it is possible to enhance the thrust deduction factor or the relative rotative efficiency, and to further reduce the effective wake fraction.

In the invention described in claim 15, an inclination angle of the propeller in the rotation direction is set to an angle range from 30° or more to 60° or less in the rotation direction of the propeller with respect to a part of the propeller center line located higher than a center axis of the propeller. According to the invention described in claim 15, the inclination angle to the rotation direction of the propeller of the strut center line of the pair of struts is within an angle range from 30° or more to 60° or less. According to this, since the support means can face the region where the reduction rate of delivered power is high, it is possible to provide a stern attachment having a high energy-saving effect.

A design method of the stern duct corresponding to the present invention described in claim 16 comprises: when the stern duct is to be designed, a step of setting an entire circumference duct having a same radius as that of the arc duct body; a step of carrying out calculation of resistance and self-propulsion simulations of the ship's hull using the entire circumference duct; a step of obtaining, from a result of calculation of the resistance and self-propulsion, a hydrodynamic force distribution of a ship's hull propulsion direction acting on a surface of the entire circumference duct and/or flow speed • flow direction distribution from behind the entire circumference duct to a propeller surface; and a step of determining a shape of the arc duct body from the entire circumference duct based on the hydrodynamic force distribution and/or the flow speed • flow direction distribution from behind the entire circumference duct to the propeller surface. According to the invention described in claim 16, it is possible to design based on a hydrodynamic force distribution of a ship's hull propulsion direction acting on a surface in the entire circumference duct and/or a flow speed • flow direction distribution from behind of the entire circumference duct to the propeller surface.

In the invention described in claim 17, further comprising a step of setting a mounting number of the support means, wherein the step of calculating the resistance and self-propulsion by the numeric value calculation of the ship's hull is executed using a set condition of the support means. According to the invention described in claim 17, it is possible to design while taking influence of the support means into account.

In the invention described in claim 18, the hydrodynamic force distribution is a thrust distribution and a resistance distribution. According to the invention described in claim 18, it is possible to easily cut out the duct shape.

A ship provided with the stern duct corresponding to the present invention described in claim 19 is provided on the stern. According to the invention described in claim 19, it is possible to provide a ship in which resistance applied to the duct body is reduced, and the energy-saving effect is high.

In the invention described in claim 20, the ship's hull is a biaxial stern catamaran type. According to the invention described in claim 20, it is possible to provide a biaxial stern catamaran type ship in which resistance applied to the duct body is reduced, and the energy-saving effect is high.

In the invention described in claim 21, the ship's hull is an existing ship's hull, and the stern duct is retrofitted to the ship's hull. According to the invention described in claim 21, even if the ship's hull is an existing ship's hull, it is possible to reduce the resistance and to enhance the energy-saving effect.

### [EFFECT OF THE INVENTION]

According to the stern duct of the present invention, since the duct body is formed into the arc shape of the angle range from 90° to 140°, even if the duct body is added to the ship's hull, it is possible to enhance the hull efficiency without increasing the resistance of the ship's hull. Since the radius of the rear end arc portion formed on the rear end of the duct body is set to 50% or less and 20% or more of the radius of the propeller, interference between the duct body and the propeller becomes large, and it is possible to make the effective wake fraction small. Further the duct body is mounted such that the duct center line inclines with respect to the rotation direction of the propeller with respect to the propeller center line in the vertical direction of the propeller. As compared with a case there the duct center line does not incline, it is possible to make the effective wake fraction smaller.

When an inclination angle of the propeller in the rotation direction is set to an angle range larger than 0° and 60° or less in the rotation direction of the propeller with respect to a part of the propeller center line located higher than a center axis of the propeller, since the inclination angle in the rotation direction of the propeller of the duct center line of the duct body is set larger than 0° and 60° or less, the duct body and the support means can face the region where the reduction rate of delivered power is high. Therefore, it is possible to provide a stern duct having a high energy-saving effect.

According to the stern duct of the present invention, by forming the duct body into the arc shape of an angle range from 180° to 270°, even if the duct body is added to the ship's hull, it is possible to improve the hull efficiency without increasing the resistance of the ship's hull. Since the radius of the rear end arc portion formed on the rear end of the duct body is set to 50% or less and 20% or more of the radius of the propeller, the interference between the duct body and the propeller increases, and the effective wake fraction reduces. The duct center line of the duct body inclines with respect to the rotation direction of the propeller with respect to the propeller center line in the vertical direction of the propeller. Therefore, as compared with a case where there is no inclination, it is possible to enhance the thrust deduction factor or the relative rotative efficiency, and to further reduce the effective wake fraction.

An inclination angle of the propeller in the rotation direction is set to an angle range of 30° or more and 60° or less in the rotation direction of the propeller with respect to a part of the propeller center line located higher than a center axis of the propeller. Therefore, the duct body and the support means can face the region where the reduction rate of delivered power is high, it is possible to provide the stern duct having the high energy-saving effect.

A cross section of the duct body in its longitudinal direction is formed into a wing shape which is convex inward of the duct body. According to this, by utilizing the propulsion direction component (thrust component) of the locking projection generated by the wing shape, it is possible to enhance the thrust deduction factor and the propulsive efficiency.

The radius of the rear end arc portion is made smaller than a radius of a front end arc portion formed on a front end. Therefore, average flow speed which flows into the propeller at a location downstream of the duct body is made slow. According to this, the effective wake fraction can be made small, and it is possible to increase the thrust component on the front end side of the duct body, and to enhance the propulsion force.

If a phantom center axis of the duct body matches with a rotation center axis of the propeller, design and installation become easy.

If a phantom center axis of the duct body is offset from a rotation center axis of the propeller, it is possible to offset the duct body to a position where a thrust force is enhanced corresponding to asymmetric flow generated by the ship's hull or the propeller.

If a phantom center axis of the duct body is inclined with respect to a rotation center axis of the propeller in a state where the ship's hull is viewed from side, the duct body such that a thrust force is further enhanced utilizing the flow of the stern portion.

If the duct body is mounted, through a strut as the support means, on a stern tube of the ship's hull or an end of the stern which covers the stern tube, it is easy to install the duct body, and to place the duct body at appropriate position especially with respect to the propeller.

If a cross section of the strut is formed into a wing shape which is convex inward of the duct body, it is possible to utilize the propulsion direction component (thrust component) of a lifting power generated by the wing shape also in the strut.

If the strut is formed into a twisted shape and a flow heading for the propeller brought into a counterflow with respect to the rotation direction of the propeller, it is possible to enhance the propulsion force of the propeller.

If a duct body-side front-to-rear width of the strut is formed larger than a stern-side front-to-rear width of the strut, it is possible to reduce the resistance of the struts and to enhance the propulsion force.

According to the stern attachment of the present invention, a pair of struts which support an arc phantom duct body are mounted on the stern such that an angle between the pair of struts falls in an angle range from 180° to 270°. Hence, even if the struts are added to the ship's hull without actually mounting the duct body, it is possible to improve the hull efficiency without increasing the resistance of the ship's hull. Further, if a radius of a phantom rear end arc portion formed on a rear end of the phantom duct body is set to 50% or less and 20% or more of a radius of the propeller, the interference between the stern attachment and the propeller increases, and it is possible to reduce the effective wake fraction. If the strut center line of the pair of struts incline in the rotation direction of the propeller with respect to the propeller center line, it is possible to enhance the thrust deduction factor or the relative rotative efficiency, and to further reduce the effective wake fraction.

If an inclination angle of the propeller in the rotation direction is set to an angle range from 30° or more to 60° or less in the rotation direction of the propeller with respect to a part of the propeller center line located higher than a center axis of the propeller, the inclination angle to the rotation direction of the propeller of the strut center line of the pair of struts is within an angle range from 30° or more to 60° or less. According to this, since the support means can face the region where the reduction rate of delivered power is high, it is possible to provide a stern attachment having a high energy-saving effect.

According to the design method of the stern duct of the present invention, it is possible to design based on a hydrodynamic force distribution of a ship's hull propulsion direction acting on a surface in the entire circumference duct and/or a flow speed • flow direction distribution from behind of the entire circumference duct to the propeller surface.

If the design method further includes a step of setting a mounting number of the support means, wherein the step of calculating the resistance and self-propulsion by the numeric value calculation of the ship's hull is executed using a set condition of the support means. According to this, it is possible to design while taking influence of the support means into account.

Based on the thrust distribution of the hydrodynamic force distribution and the resistance distribution, it is possible to easily cut out a duct shape from the perfect circle shape.

According to the ship having the stern duct of the invention, it is possible to provide a ship in which resistance applied to the duct body is reduced and an energy-saving effect is high.

If the ship's hull is a biaxial stern catamaran type, it is possible to provide a biaxial stern catamaran type ship in which resistance applied to the duct body is reduced, and the energy-saving effect is high.

If the ship's hull is an existing ship's hull and the stern duct is retrofitted to the ship's hull, it is possible to reduce the resistance and to enhance the energy-saving effect even in the existing ship's hull.

### [BRIEF DESCRIPTION OF THE DRAWINGS]

Fig. 1 is a side view of essential portions of a ship showing a state where a stern duct according to a first embodiment of the present invention is mounted;
Fig. 2 is a front view of essential portions showing a state where the ship is forwardly viewed from backward;
Fig. 3 is a perspective view of essential portions of the ship as viewed from diagonally backward;
Fig. 4 is a perspective view of a stern duct according to the embodiment;
Fig. 5 is an explanatory diagram showing the stern duct;
Fig. 6 is a perspective view of a stern duct according to another embodiment of the present invention;
Fig. 7 is a explanatory view of a stern duct according to another embodiment of the present invention;
Fig. 8 is a explanatory view of a stern duct according to another embodiment of the present invention;
Fig. 9 is a explanatory view of a stern duct according to another embodiment of the present invention;
Fig. 10 is a explanatory view of a stern duct according to another embodiment of the present invention;
Fig. 11 is a side view of principle items of a ship's hull and a three-dimensional shape which are applied to the embodiment;
Fig. 12 is a diagram showing duct principal items of an entire circumference having the same radius as the stern duct of the embodiment, and a three-dimensional shape thereof;
Fig. 13 is a diagram showing propeller principal items of a propeller used in the embodiment;
Fig. 14 is a diagram showing mounting positions of a duct and the propeller with respect to the ship's hull which are applied to the embodiment;
Fig. 15 is a distribution diagram in a circumferential direction of a thrust component and a resistance distribution of the entire circumference duct;
Fig. 16 is a contour line diagram of a thrust distribution and a resistance distribution on a surface of the entire circumference duct;
Fig. 17 is a diagram showing a thrust ratio when a sector center angle (angle range) β is defined as β=180°, β=140° and β=120° based on data shown in Fig. 15;
Fig. 18 is a diagram showing a cut-out range of a duct shape where an effective thrust concerning the center angle (angle range) β is obtained;
Fig. 19 is a diagram showing a deceleration effect of a duct;
Fig. 20 is a characteristic diagram showing a relation between an inclination angle θ of the duct body and self-propulsion factors;
Fig. 21 is a characteristic diagram showing a relation between the inclination angle θ of the duct body and a reduction rate of delivered power;
Fig. 22 is a front view of essential portions showing a state where a biaxial stern catamaran type ship provided with the stern duct is forwardly viewed from backward;
Fig. 23 is a front view of essential portions showing a state where another biaxial stern catamaran type ship provided with another stern duct is forwardly viewed from backward;
Fig. 24 is a side view of essential portions of a ship showing a state where a stern duct according to a second embodiment of the present invention is mounted;
Fig. 25 is a front view of essential portions showing a state where the ship is forwardly viewed from backward;
Fig. 26 is a perspective view of essential portions of the ship as viewed from diagonally backward;
Fig. 27 is a perspective view of the stern duct according to the embodiment;
Fig. 28 is a front view of the stern duct according to another embodiment;
Fig. 29 is a side sectional view of the stern duct shown in Figs. 24 to 27 or 28.
Fig. 30 is a perspective view of a stern duct according to another embodiment of the present invention;
Fig. 31 is a perspective view of a stern duct according to another embodiment of the present invention;
Fig. 32 is a side sectional view of a stern duct according to another embodiment of the present invention;
Fig. 33 is an explanatory diagram showing a stern duct according to the another embodiment of the present invention;
Fig. 34 is a diagram showing principal items of an enlarged ship model and a propeller model used in a test;
Fig. 35 is a schematic diagram of a partial duct model used in a test;
Fig. 36 is a diagram showing parameters indicating principal items of the duct model which carries out a test;
Fig. 37 is a diagram showing principal items of the duct model which carries out a test;
Fig. 38 is a characteristic diagram (first model) showing a relation between an inclination angle θ of the duct body and self-propulsion factors;
Fig. 39 is a characteristic diagram (second model) showing the relation between the inclination angle θ of the duct body and the self-propulsion factors;
Fig. 40 is a characteristic diagram (third model) showing the relation between the inclination angle θ of the duct body and the self-propulsion factors;
Fig. 41 is a characteristic diagram (fourth model) showing the relation between the inclination angle θ of the duct body and the self-propulsion factors;
Fig. 42 is a characteristic diagram (fifth model) showing the relation between the inclination angle θ of the duct body and the self-propulsion factors;
Fig. 43 is a characteristic diagram showing a relation between the inclination angle θ of the duct body and a reduction rate of delivered power;
Fig. 44 is a characteristic diagram showing a relation between the inclination angle θ of the duct body and self-propulsion factors;
Fig. 45 is a characteristic diagram showing a relation between the inclination angle θ of the duct body and the reduction rate of delivered power;
Fig. 46 is a diagram showing all of results of a self-propulsion test using a partial duct model carried out in the test;
Fig. 47 is a front view of essential portions showing a biaxial stern catamaran type ship provided with the stern duct as forwardly viewed from backward; and
Fig. 48 is a front view of essential portions showing a biaxial stern catamaran type ship provided with another stern duct as forwardly viewed from backward

### [MODE FOR CARRYING OUT THE INVENTION]

A stern duct according to a first embodiment of the present invention will be described using the drawings.

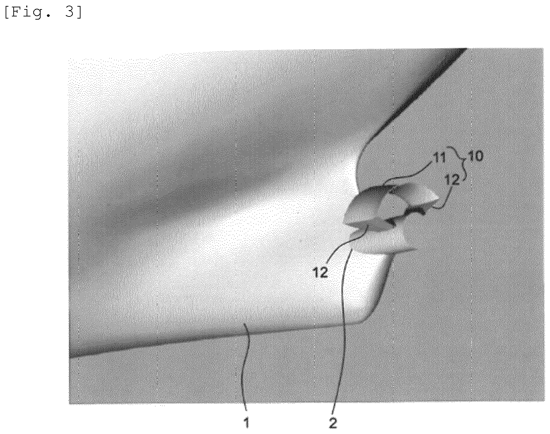

Fig. 1 is a side view of essential portions of a ship showing a state where the stern duct is mounted, Fig. 2 is a front view of essential portions showing a the ship forwardly viewed from backward, and Fig. 3 is a perspective view of essential portions of the ship as viewed from diagonally backward;

As shown in Fig. 1, the stern duct 10 according to the first embodiment is mounted in front of a propeller 3 which is mounted on a stern 2 of a ship's hull 1. Although the stern duct 10 is mounted on the stern 2 which covers a stern tube in Fig. 1, the stern duct 10 may be mounted on the stern tube of the ship's hull 1.

As shown in Figs. 1 to 3, the stern duct 10 is composed of a duct body 11 and support means 12. The duct body 11 is mounted on the stern 2 through the support means 12.

The duct body 11 is formed into an arc shape, and is placed higher than a rotation center axis Xp of the propeller 3. Concerning the arc shape, the stern duct 10 is formed into an arc, and the arc shape includes deformation of about ±5%, and a chamfered portion R for smoothly connecting a junction between the duct body 11 and the support means 12.

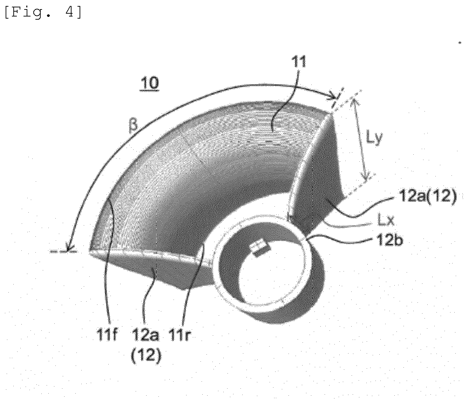

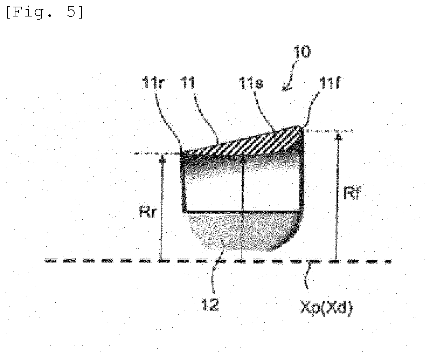

Fig. 4 is a perspective view of the stern duct according to the first embodiment, and Fig. 5 is an explanatory diagram showing the stern duct.

The duct body 11 is formed into an arc shape having a center angle (angle range) β from 90° to 140°. By forming the duct body 11 into the arc shape of the center angle β, it is possible to enhance the hull efficiency without increasing a total resistance coefficient by the duct body 11.

A radius Rr of a rear end arc portion 11r formed on a rear end of the duct body 11 is made smaller than a radius Rf of a front end arc portion 11f formed on a front end of the duct body 11. By making the radius Rr of the rear end arc portion 11r smaller than the radius Rf of the front end arc portion 11f in this manner, average flow speed flowing into the propeller 3 downstream of the duct body 11 can be made slow, and it is possible to increase a thrust component on the side of the front end of the duct body 11 and to enhance the propulsion force.

It is preferable that the radius Rr of the rear end arc portion 11r is in a range of 50% or less and 20% or more of a radius of the propeller 3 shown in Fig. 1 or 2. If the radius Rr of the rear end arc portion 11r is in a range of 50% or less and 20% or more of a radius of the propeller 3, it is possible to increase interference between the duct body 11 and the propeller 3. If the radius Rr of the rear end arc portion 11r exceeds 50% of the radius of the propeller 3, the effective wake fraction is increased, and resistance becomes large and thus, this is not preferable. Further, since a shaft radius of the propeller 3 is generally in a range of 16 to 18% of a radius of the propeller 3, it is preferable that the radius Rr of the rear end arc portion 11r is 20% or more of the radius of the propeller 3. If the radius Rr of the rear end arc portion 11r is set to 50% or less and 20% or more of the radius of the propeller 3, a flow which passes through the duct body 11 and which accelerates is guided to a range of a blade root of the propeller 3 without abutting against a location in the vicinity of 70% to 80% of a radius of the propeller 3 at which a maximum thrust force of the propeller 3 is generated, and the average flow speed of a surface of the propeller 3 is made slower, and the effective wake fraction is enhanced..

As shown in Fig. 4, the support means 12 is composed of struts 12a connected to both sides of the duct body 11, and mounting portions 12b for mounting the struts 12a on the stern 2. The strut 12a is formed into a wing shape having a cross section in a convex form inward of the duct body 11. By forming the cross section of the strut 12a into the wing shape in this manner, the strut 12a can also utilize the propulsion direction component (thrust component) of lifting power generated by the wing shape.

In the strut 12a, a longitudinal width Ly on the duct body side is greater than a longitudinal width Lx on the duct body side. By forming the duct body side longitudinal width Ly larger than the duct body side longitudinal width Lx which is on the side of the mounting portion 12b in this manner, it is possible to reduce the resistance of the strut, to effectively utilize the flow and to enhance the propulsion force.

The ring-shaped mounting portion 12b may be eliminated, and the strut 12a may be mounted directly on an end of the stern 2 which covers the stern tube or on the stern tube of the ship's hull 1.

As shown in Fig. 5, a cross section 11s in the longitudinal direction of the duct body 11 is formed into a black shape which is convex inward of the duct body 11. By forming the cross section 11s into the black shape which is convex inward of the duct body 11 in this manner, it is possible to generate the lifting power in the propulsion direction of the ship's hull 1 on the side of the front end of the duct body 11, and to enhance the propulsive efficiency.

As shown in Fig. 5, a phantom center axis Xd which connects centers of the arcs of the duct body 11 match with the rotation center axis Xp of the propeller 3. If the phantom center axis Xd and the rotation center axis Xp match with each other, it becomes easy to design and attach the duct body 11.

It is not absolutely necessary that the phantom center axis Xd corresponds to centers of all of arc surfaces of the duct body 11. For example, radii are slightly difference between the center portion and the both side portions of the duct body 11 re slightly different from each other, or a center angle β of the front end arc portion 11f and a center angle β of the rear end arc portion 11r are difference from each other in some cases. Therefore, it is unnecessary that the duct body 11 a perfect arc, and may be formed into a substantially arc shape.

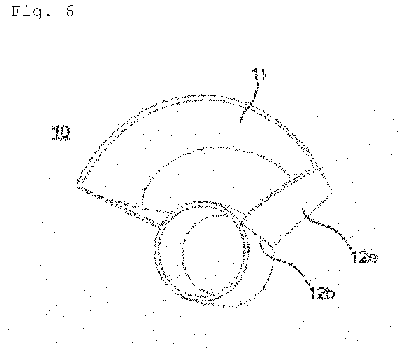

Fig. 6 is a perspective view of a stern duct according another embodiment of the first embodiment.

The stern duct 10 by this embodiment uses a twisted shaped strut 12e instead of the strut 12a, and a flow heading for the propeller 3 is brought into counterflow. That is, the strut 12e has a shape twisted in a direction opposite from rotation of the propeller 3. By bringing the flow heading for the propeller 3 into a flow heading for a direction opposite from the rotation direction of the propeller 3 using the twisted strut 12e, the propulsion force of the propeller 3 can be enhanced.

It is possible to employ such a structure that one of the strut 12a and the strut 12e as well as the duct body 11 are mounted on the ship's hull 1, or the duct body 11 is mounted directly on the ship's hull 1 without using both the strut 12a and the strut 12e.

Fig. 7 is an explanatory diagram showing a stern duct according to another embodiment of the first embodiment.

In Fig. 7, the phantom center axis Xd of the duct body 11 is offset from the rotation center axis Xp of the propeller 3. By offsetting the phantom center axis Xd from the rotation center axis Xp in this manner, it is possible to provide the stern duct 10 at a position where a thrust force is enhanced in response to an asymmetric flow which is generated by the ship's hull 1, the stern 2 or the propeller 3.

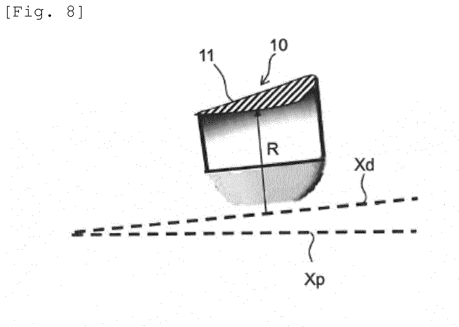

Fig. 8 is an explanatory diagram showing a stern duct according to another embodiment of the first embodiment.

In Fig. 8, the phantom center axis Xd of the duct body 11 is inclined with respect to the rotation center axis Xp of the propeller 3 in a state where the ship's hull 1 is viewed from a side. By inclining the phantom center axis Xd with respect to the rotation center axis Xp in this manner, the stern duct 10 can be mounted such that a thrust force is enhanced in response to a flow heading downward of the stern 2.

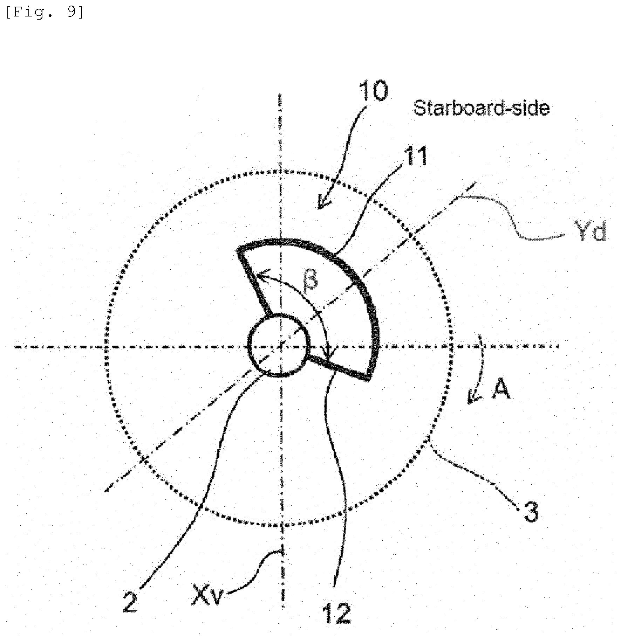

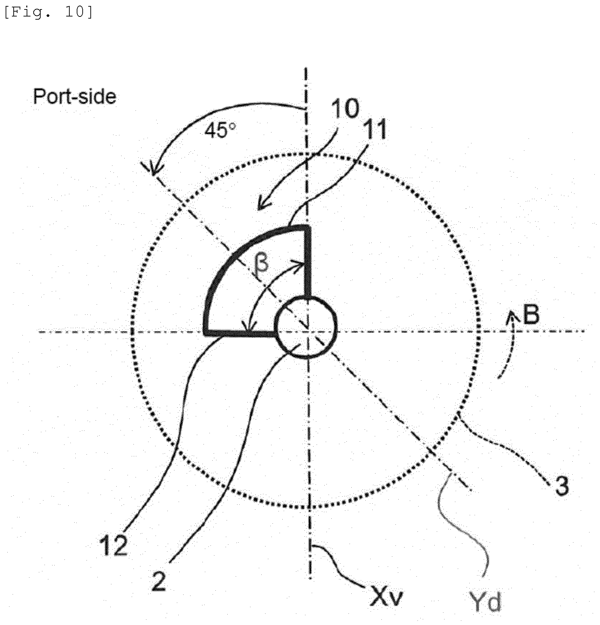

Figs. 9 and 10 are explanatory diagrams showing a stern duct according to another embodiment of the first embodiment.

According to a stern duct 10 of this embodiment, a duct body 11 is mounted on a stern 2 by means of support means 12 such that a duct center line Yd of the duct body 11 inclines in a rotation direction of a propeller 3 with respect to a propeller center line Xv in the vertical direction of the propeller 3 in a state where the ship's hull 1 is forwardly viewed from backward.

Fig. 9 shows the propeller 3 in a clockwise direction A in a state where a ship's hull 1 is forwardly viewed from backward. When the propeller 3 rotate clockwise A in this manner, if the duct body 11 is place at an upper right quadrant it is possible to enhance the thrust deduction factor and relative rotative efficiency, and to make the effective wake fraction small.

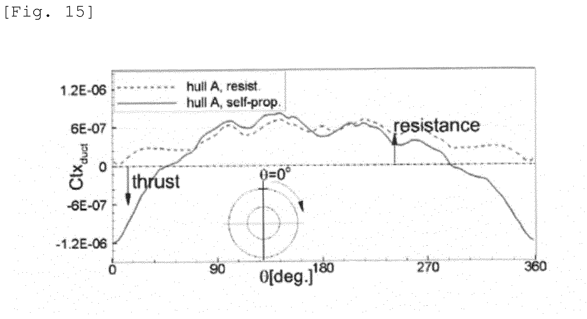

Fig. 9 shows a case where a center angle β of the duct body 11 is 120°, the duct body 11 is mounted such that it is rotated 40° toward starboard-side from a position symmetric with respect to a center line Xv in the vertical direction of the propeller 3. In Fig. 15, a position of 12:00 is defined as θ (inclination angle) =0° and a clockwise direction A is defined as plus in a state where the entire circumference duct is viewed from backward. When the propeller 3 rotates in the clockwise direction A, the duct body 11 is inclined from θ=minus 30° (30° in port-side) to θ=plus 90° (90° in starboard-side), and the stern duct 10 is mounted such that the duct body 11 becomes asymmetrically with respect to the center line Xv in the vertical direction of the propeller 3. According to this, the duct body 11 can be placed at an upper right quadrant and it is possible to increase the reduction rate of delivered power.

As shown in Fig. 9 also, especially when the center angle β of the duct body 11 exceeds 90°, the duct body 11 surely located at a quadrant other than the upper right quadrant, but if even a portion of the duct body 11 is placed at the upper right quadrant, it is possible to enhance the thrust deduction factor or the relative rotative efficiency, and to reduce the effective wake fraction. As a result, by the stern duct 10, it is possible to enhance the reduction rate of delivered power and to enhance the energy-saving effect.

Fig. 10 shows a case where the propeller 3 rotates in a counterclockwise direction B as forwardly viewing the ship's hull 1 from backward. When the propeller 3 rotates in the counterclockwise direction B in this manner, if the duct body 11 is placed at an upper left quadrant, it is possible to enhance the thrust deduction factor or the relative rotative efficiency, and to reduce the effective wake fraction.

Fig. 10 shows a case where the center angle β of the duct body 11 is 90°, and the duct body 11 is mounted such that it is rotated toward the starboard-side 45° from a position which is symmetric with respect to the center line Xv in the vertical direction of the propeller 3. When the propeller 3 rotates in the counterclockwise direction B, since plus and minus become opposite from each other as compared with data shown in Fig. 15, the duct body 11 is inclined within a range from θ=minus 30° (30° toward starboard-side) to θ=plus 90° (90° to port-side), and the stern duct 10 is mounted on the center line Xv in the vertical direction of the propeller 3 such that the duct body 11 is symmetrically formed. According to this, the duct body 11 is placed at an upper left quadrant, and the reduction rate of delivered power can be increased.

Here, as shown in Fig. 10 also, even when the center angle β of the duct body 11 is 90°, the duct body 11 is placed at a quadrant other than the upper left quadrant in some cases. However, if even a portion of the duct body 11 is placed at the upper left quadrant, it is possible to enhance the thrust deduction factor or the relative rotative efficiency, and to reduce the effective wake fraction.

As explained in Figs. 9 and 10, the duct center line Yd of the duct body 11 is inclined in a rotation direction of the propeller 3 with respect to the propeller center line Xv in the vertical direction of the propeller 3 in the case where the ship's hull 1 is forwardly viewed from backward. The inclination angle θ of the duct center line Yd in the rotation direction of the propeller 3 is in an angle range from minus 30° to plus 90° in the rotation direction of the propeller 3 with respect to a part of the propeller center line located higher than a center axis of the propeller 3 (direction of 12:00). More preferably, the angle range of the inclination angle θ of the duct center line Yd in the rotation direction of the propeller 3 is larger than 0° and smaller than 60° in the rotation direction of the propeller 3.

The center angle β of the duct body 11 is formed into an arc shape within an angle range from 90° to 140°. As shown in Fig. 5, a radius Rr of the rear end arc portion 11r formed on the rear end of the duct body 11 is not more than 50 % and not less than 20% of the radius of the propeller 3.

Next, a design method of the stern duct of the first embodiment will be described below.

In this embodiment, a ship's hull having an increased enlarged degree of the stern of the Panamax-size • Bulk Carrier (PxBC) was used.

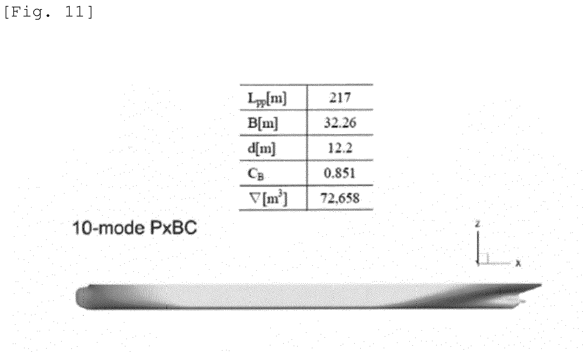

Fig. 11 shows ship's hull principal items and a side view of a three-dimensional shape of a ship's hull to which the invention is applied.

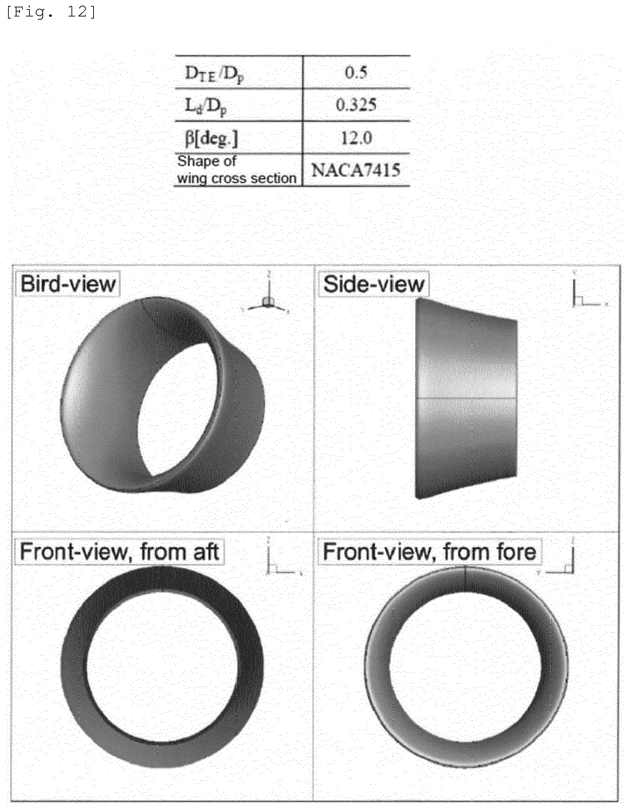

Fig. 12 shows duct principal items and a three-dimensional shape concerning an entire circumference duct having the same radius as that of the stern duct according to the embodiment.

When the stern duct 10 according to the embodiment is design, first, the entire circumference duct having the same radius as that of an arc duct body 11 is set.

Here, a duct having a so-called Weather Adapted Duct (WAD) as a basic shape is used as the entire circumference duct.

In Fig. 12, D_{T.E.} represents a duct rear end diameter, D_{P} represents a propeller diameter, L_{d} represents a duct blade section cord length, and β represents an opening angle of a wing cross section.

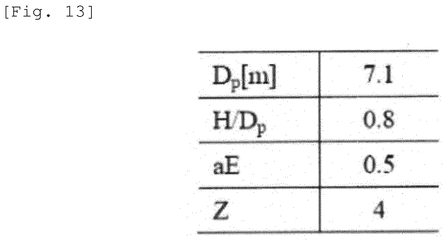

Fig. 13 shows the propeller principal items concerning the propeller which is to be used.

In Fig. 13, H/D_{P} represents a pitch ratio, aE represents a developed area ratio, and Z represents the number of blades.

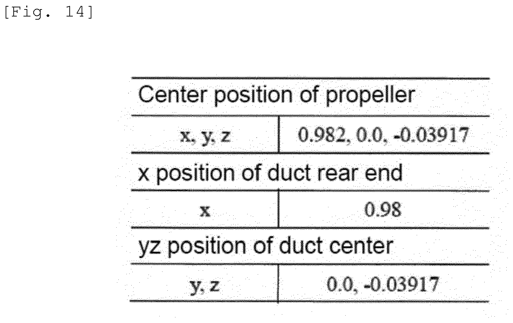

Fig. 14 shows mounting positions of the duct and the propeller with respect to the ship's hull.

A coordinate origin is set at a bow normal (FP) of the ship's hull 1, a direction of the stern normal (AP) from FP is set as a positive direction of x-axis, a direction from port-side to starboard-side is set as a positive direction of y-axis, and a direction from keel to deck is set as a positive direction of z-axis. A ship's length is set to 1 (i.e., x=0.0 is Fp, and x=1.0 is AP).

As shown in Fig. 14, there is a clearance of about 5% of D_{P} between a rear end of the duct and a front edge of the propeller, and a center of the duct matches with a shaft center line.

Next, a ship shape, a duct and a propeller are set, and resistance and self-propulsion are calculated by calculating a numeric value of the ship's hull using the entire circumference duct.

Analysis of CFD (Computational Fluid Dynamics) is carried out using the ship shape, the duct and the propeller shown in Figs. 11 to 14.

As a result of CFD analysis, in the case of a ship shape having a duct, resistance is not increased and hull efficiency is enhanced by about 3.2% as compared with a ship shape having no duct. It is considered that a reason why total resistance coefficient is not increased almost at all although the ship's hull 1 is provided with the duct is that the duct itself outputs a thrust force.

Next, a hydrodynamic force distribution of an inner surface of the entire circumference duct is obtained from a calculation result of resistance and self-propulsion.

Fig. 15 shows a thrust component of the entire circumference duct and a circumferential direction distribution of a resistance distribution.

In Fig. 15, in the case of the inclination angle θ, a position of 12:00 as viewing the entire circumference duct from backward is defined as 0°, and a clockwise direction from the position of 12:00 is defined as positive. In Fig. 15, a vertical axis Ctx is x-direction fluid force, the fluid force becomes resistance in a positive value (higher than 0 line), the fluid force becomes propulsion force in a negative value (lower than 0 line).

As shown in Fig. 15, when the propeller 3 is not operated (dotted line in the drawing), an x-direction fluid force (Ctxlduct) is in a positive value over the entire circumference, i.e., is resistance (resistance).

However, if the propeller 3 is operated, Ctxlduct acts as a negative value in the vicinity of 0°<θ<45°, 288°<θ<360°, i.e., as thrust. It is considered that when the propeller 3 is operated, this thrust component is a cause not increasing the total resistance coefficient even when the duct is mounted.

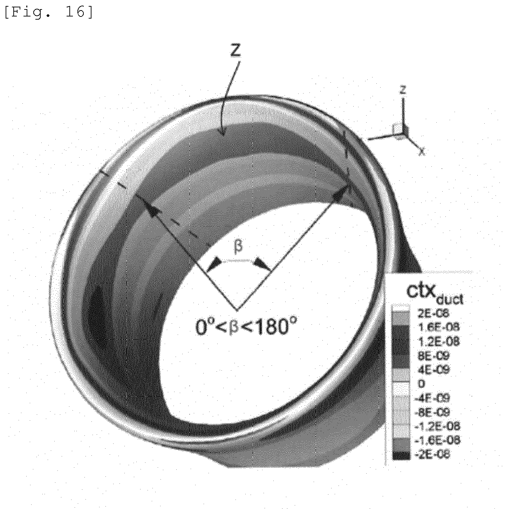

Fig. 16 is a contour line diagram of the thrust distribution and the resistance distribution on a surface of the entire circumference duct, and Fig. 16 three-dimensionally shows how the resistance/thrust component shown in Fig. 15 are distributed on a duct surface.

It can be found that the thrust component of duct shown in Fig. 15 is mainly generated inside of an upper surface of a front end of the duct in Fig. 16 (region Z shown by arrow in drawing).

That is, the region Z where the thrust component is generated is a sector portion surrounded by an angle range of 0°<β<180° if the center angle of the sector shape is defined as β. Although the thrust itself is generated also in the vicinity of inside of the side surface of the duct, since resistance larger than this thrust acts on the duct outer side of this portion, as the entire fluid force obtained by integrating in the duct cord direction, the inclination angle θ shown in Fig. 15 becomes the resistance as shown in the vicinity of 90°.

After the hydrodynamic force distribution of the inner surface of the entire circumference duct is obtained from the calculation result of resistance and self-propulsion, a shape of the arc duct body 11 is determined from the entire circumference duct based on the hydrodynamic force distribution. Here, the hydrodynamic force distribution is a thrust distribution and a resistance distribution.

When a shape of the arc duct body 11 is determined from the entire circumference duct based on the hydrodynamic force distribution, it is possible to easily cut out the shape of the duct body 11 by using the contour line (Fig. 16) of the thrust distribution and the resistance distribution and/or the circumferential direction (Fig. 15).

Further, a flow speed · flow direction distribution from a back side of the entire circumference duct to the propeller surface may be obtained. By obtaining the flow speed · flow direction distribution, it is possible to design while taking the effective wake fraction into account. It is possible to design using one of or both of the flow speed · flow direction distribution and the hydrodynamic force distribution of the inner surface, but if both of them are used, it is possible to design in more detail.

If the shape of the duct body 11 and the inclination angle θ are determined based on the energy-saving rate with respect to an installation angle of the duct in a small duct in an angle range from 90° to 140°, it is possible to easily cut out the shape of the duct body 11.

If a step of setting the number of mounting operations of the support means 12 is provided and a step of calculating the resistance and self-propulsion by the numeric value calculation of the ship's hull 1 using a set condition of the support means 12 is executed, it is possible to design while taking the influence of instruction means 12 into account.

Next, a cutting out range of the shape of the duct body 11 will be explained.

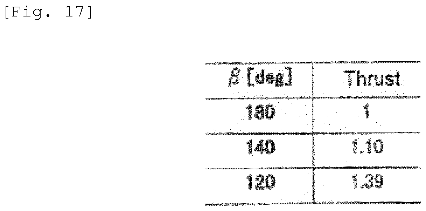

Fig. 17 shows a thrust ratio when a sector center angle (angle range) β is set to β=180°, β=140° and β=120° based on data shown in Fig. 15.

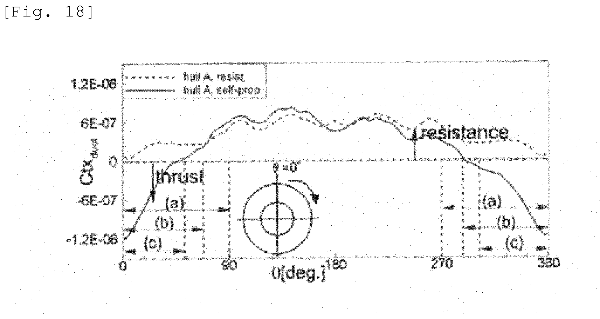

Fig. 18 shows a cutting out range of the duct shape in which effective thrust concerning the center angle (angle range) β can be obtained.

If thrust when the sector center angle β is 180° using data shown in Fig. 15 is 1, a thrust ratio is 1.10 when β is 140°, and thrust ratio is 1.39 when β is 120°.

That is, as compared with β=180°, thrust is increased about 10% and 40% when β is 140° and 120°, respectively.

Therefore, the sector center angle (angle range) β can be formed into an arc shape from 90° to 180° (180° is upper limit as shown by a range (a) in Fig. 18). However, it is preferable that the sector center angle (angle range) β is formed into an arc shape in a range of 90° to 140° (140° is upper limit as shown by a range (b) in Fig. 18), and it is most preferable that the sector center angle (angle range) β is formed into an arc shape in a range of 90° to 120° as shown in a range (c) in Fig. 18.

If attention is paid to thrust component and resistance component, the x-direction fluid force is a negative value as described above, and a range which becomes a propulsion force is around 0°<θ<45°, 288°<θ<360°. Center positions of these ranges are in the vicinity of 346.5°, and if a center line which divides the sector center angle β into two is expressed by quadrant, the center positions exists at an upper left quadrant. Therefore, it is preferable that the duct body 11 exists at least at the upper left quadrant, and it is more preferable that an essential portion of the duct body 11 exists at the upper left quadrant. In this case, as a result, the duct body 11 is placed asymmetrically with respect to the center line Xv in the vertical direction of the propeller 3.

A range where the x-direction fluid force becomes a negative value and the force becomes the propulsion force is varied by a rotational direction of the propeller 3 as described above, and by structures of the ship's hull 1 and the stern 2 and by the characteristics of the propeller 3.

By decelerating the rearward flow of the duct, the propeller 3 can obtain the gain in the axial direction.

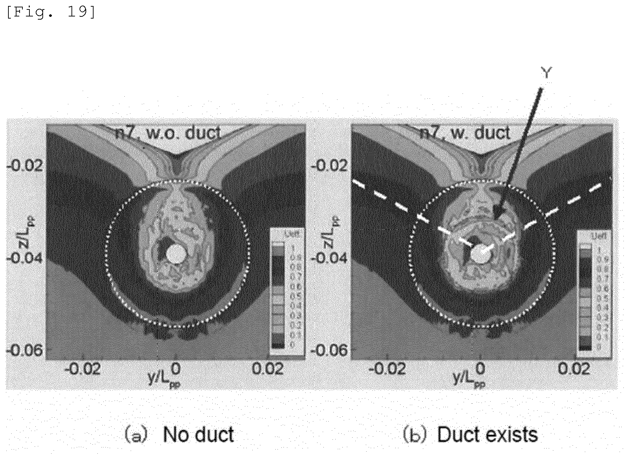

Figs. 19 shows a deceleration effect of the duct.

Fig. 19(a) shows that the duct does not exist, and Fig. 19(b) shows that the duct exists.

In Fig. 19(b), a region shown by an arrow Y is a region where the deceleration effect of the duct can be seen. If the position of 12:00 as viewing the duct from backward is defined as a center, it is found that deceleration effects can be obtained in regions of about 60° in left and right quadrants with respect to the center.

From the above, it is found that a region where the duct outputs thrust and a region where the deceleration effect is generated substantially match with each other, and these regions are surrounded by a sector having the center angle β of about 120° while centering on the position of 12:00 as viewing the duct from backward.

Therefore, from the deceleration effect of the duct shown in Figs. 19, it is preferable that the duct body 11 faces the region from 90° to 140° including the adjacent region of about 120°, and it is more preferable that the duct body 11 faces a region from 90° to 120°.

When the duct body 11 the region from 90° to 140° having a small angle range β is made to face a position where especially a propulsion direction component (thrust component) above the rotation center axis of the propeller 3 is largely obtained to lower the costs and to facilitate the equipment, this placement is preferable concerning the deceleration effect of the duct.

As described above, according to the design method of the stern duct 10 of the embodiment, the stern duct 10 is designed by a step of setting the entire circumference duct having the same radius as that of the arc duct body 11, a step of calculating resistance and self-propulsion simulations of the ship's hull 1 using the entire circumference duct, a step of obtaining a hydrodynamic force distribution of an inner surface of the entire circumference duct from the result of calculation of the resistance and self-propulsion and/or flow speed · flow direction distribution from a bask side of the entire circumference duct to the propeller surface, and a step of determining a shape of the arc duct body 11 from the entire circumference duct based on the hydrodynamic force distribution and/or the flow speed · flow direction distribution from the back side of the entire circumference duct to the propeller surface. According to this, it is possible to design the arc duct body 11 based on the conventional design method in the entire circumference duct.

Next, an effect obtained by asymmetrically providing the designed arc duct body 11 with respect to the propeller center line Xv in the vertical direction of the propeller 3 will be described. In a state where the ship's hull 1 is forwardly viewed from backward, since the duct center line Yd of the duct body 11 has the inclination angle θ in the rotation direction of the propeller 3 with respect to a part of the propeller center line Xv located higher than a center axis of the propeller 3, the duct body 11 of the stern duct 10 can be asymmetrically provided with respect to the propeller center line Xv in the vertical direction of the propeller 3.

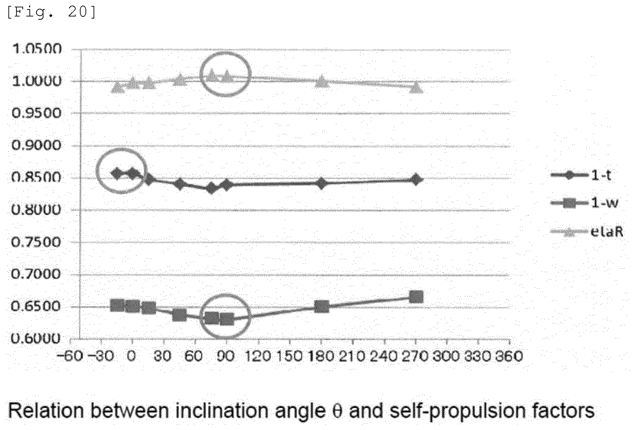

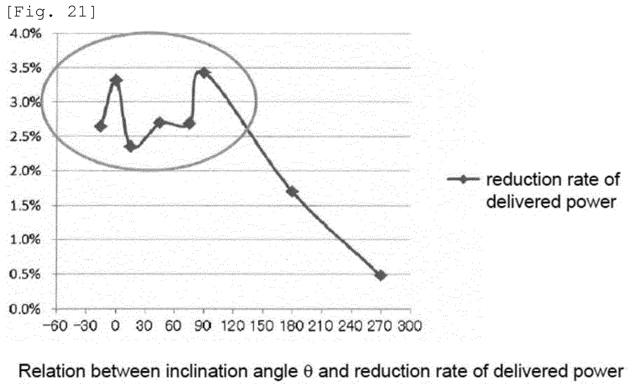

Fig. 20 is a characteristic diagram showing a relation between the inclination angle of the duct body and the self-propulsion factors, and Fig. 21 is a characteristic diagram showing a relation between the inclination angle of the duct body and the reduction rate of delivered power.

In Figs. 20 and 21, an angle 0 means the duct body 11 is symmetrically provided with respect to the center line Xv in the vertical direction of the propeller 3 as forwardly viewing the ship's hull 1 from the backward. The plus inclination angle inclines the duct body 11 toward the starboard-side, and the minus inclination angle inclines the duct body 11 toward the port-side. The propeller 3 rotates clockwise A. The vertical axis is based on that there is no duct.

As the self-propulsion factors, Fig. 20 shows a thrust deduction factor (1-t), an effective wake fraction (1-w), and relative rotative efficiency ratio (etaR).

In Figs. 20 and 21, a preferable position of the inclination angle θ is shown by circles.

As Figs. 20 and 21, when the propeller 3 is the rotates clockwise A, the duct body 11 is inclined from minus 30° (minus 30° toward port-side) to plus 90° (90° toward starboard-side), and the stern duct 10 is mounted such that the duct body 11 is formed asymmetrically with respect to the center line Xv in the vertical direction of the propeller 3. According to this, the reduction rate of delivered power can be increased. When the propeller 3 rotates the counterclockwise B, the duct body 11 is inclined in a range of 30° toward the starboard-side to 90° toward the port-side, and the stern duct 10 is mounted such that the duct body 11 is formed asymmetrically with respect to the center line Xv in the vertical direction of the propeller 3. According to this, it is possible to increase the reduction rate of delivered power. Even if the sector center angle β of the previously designed propeller body 11 is in a range of 90° to 140° or in a range of 90° to 120°, if an inclination angle of the duct center line Yd in the rotation direction of the propeller 3 is made to fall in an angle range of 0° or larger and 60° or smaller in the rotation direction of the propeller 3 with respect to the propeller center line Xv, it is possible to cover one peak or two peaks of the reduction rate of delivered power in Fig. 21, and it is possible to make the duct body 11 and the strut 12a face high regions of the reduction rate of delivered power.

The ship's hull principal items and propeller principal items which acquire data in Figs. 20 and 21 are different from the ship's hull principal items in Fig. 11 and the propeller principal items in Fig. 13 when the numeric value calculation result in Fig. 15 is obtained.

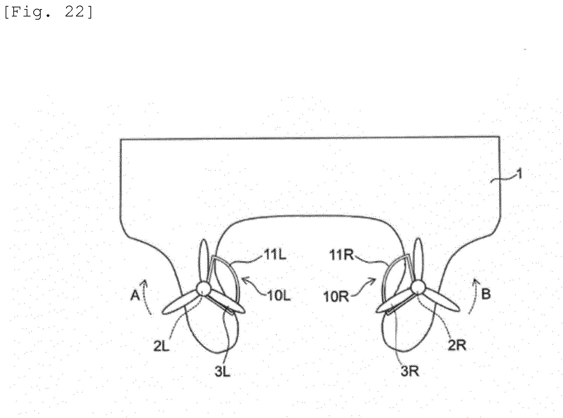

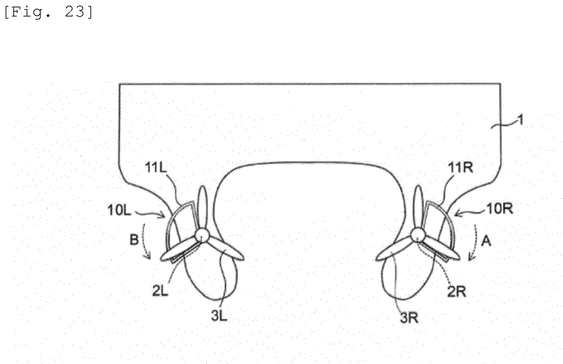

Figs. 22 and 23 are front views of essential portions showing a state where a biaxial stern catamaran type ship provided with the stern duct as forwardly viewed from backward.

In Figs. 22 and 23, in the ship's hull 1, a stern tube 2R of the starboard-side skeg is provided with a starboard-side propeller 3R, and a stern tube 2L of a port-side skeg is provided with a port-side propeller 3L.

In Fig. 22, the starboard-side propeller 3R rotates counterclockwise B, the port-side propeller 3L rotates clockwise A, and shows they inward rotate.

In the case of the biaxial stern catamaran type ship, the starboard-side stern duct 10R corresponding to the starboard-side propeller 3R places the duct body 11R at the upper left quadrant, and the port-side stern duct 10L corresponding to the port-side propeller 3L places the duct body 11L at the upper right quadrant. According to this, it is possible to increase the thrust deduction factor and to enhance the relative rotative efficiency, and to reduce the effective wake fraction.

Fig. 23 shows that the starboard-side propeller 3R rotates clockwise A, the port-side propeller 3L rotates counterclockwise B, and they outward rotate.

In the case of the biaxial stern catamaran type ship by the outward rotation, the duct body 11R of the starboard-side stern duct 10R corresponding to the starboard-side propeller 3R is placed at the upper right quadrant, and the port-side stern duct 10L corresponding to the port-side propeller 3L places the duct body 11L at the upper left quadrant. According to this, it is possible to increase the thrust deduction factor and to enhance the relative rotative efficiency, and to reduce the effective wake fraction.

The stern duct 10 of the embodiment can also be applied to the biaxial stern catamaran type ship's hull 1, resistance applied to the duct body 11 can be reduced, and the stern duct 10 can provides a biaxial stern catamaran type ship having high an energy saving effect.

The stern duct 10 of the embodiment can be retrofitted to an existing ship's hull 1. In this case, resistance can be reduced and the energy-saving effect can be enhanced even in the existing ship's hull 1.

Next, a stern duct according to a second embodiment of the present invention will be explained using the drawings.

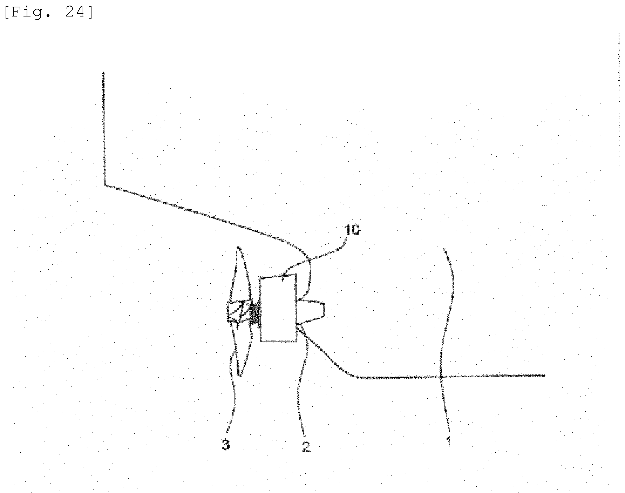

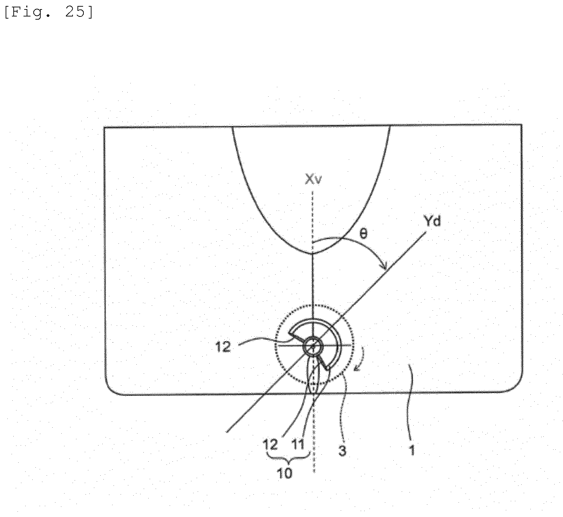

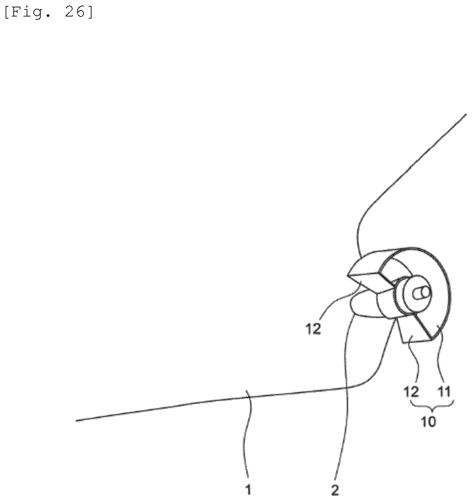

Fig. 24 is a side view of essential portions of a ship showing a state where the stern duct is mounted, Fig. 25 is a front view of essential portions showing a state where the ship is forwardly viewed from backward, and Fig. 26 is a perspective view of essential portions of the ship as viewed from diagonally backward.

As shown in Fig. 24, the stern duct 10 of the second embodiment is mounted in front of a propeller 3 mounted on a stern 2 of a ship's hull 1. Although the stern duct 10 is mounted on the stern 2 which covers the stern tube in Fig. 24, the stern duct 10 may be mounted on the stern tube of the ship's hull 1.

As shown in Figs. 25 and 26, the stern duct 10 is composed of a duct body 11 and support means 12. The duct body 11 is mounted on the stern 2 through the support means 12.

The duct body 11 is mounted on the stern 2 through the support means 12 such that a duct center line Yd of the duct body 11 inclines in a rotation direction of the propeller 3 with respect to a part of the propeller center line Xv located higher than a center axis of the propeller 3 in a state where the ship's hull 1 is forwardly viewed from backward.

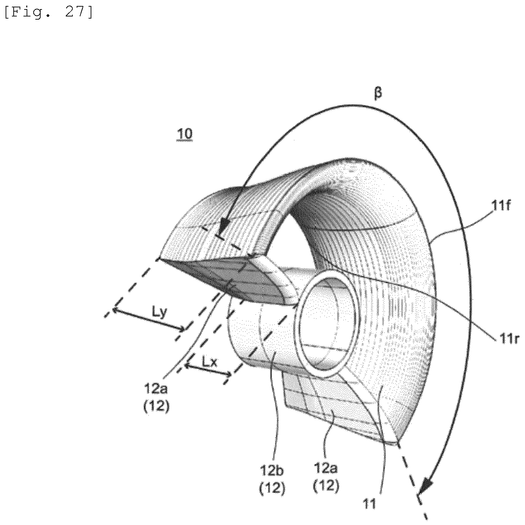

Fig. 27 is a perspective view of the stern duct according to the second embodiment.

A center angle (angle range) β of the duct body 11 is formed into an arc shape from 180° to 270°, more preferably into an arc shape from 225° to 255°. By forming the duct body 11 into such an arc shape having the center angle β, it is possible to enhance the hull efficiency without increasing the total resistance coefficient by the duct body 11. The arc shape means that the stern duct 10 substantially forms an arc, and includes deformation of ±5%, and R for smoothly connecting a junction between the duct body 11 and the support means 12.

A radius Rr of the rear end arc portion 11r formed on a rear end of the duct body 11 is made smaller than a radius Rf of the front end arc portion 11f formed on a front end of the duct body 11. By making the radius Rr of the rear end arc portion 11r smaller than the radius Rf of the front end arc portion 11f in this manner, average flow speed flowing into the propeller 3 downstream of the duct body 11 can be made slow, and it is possible to increase the thrust component on the front end side of the duct body 11 and to increase a propulsion force.

It is preferable that the radius Rr of the rear end arc portion 11r is 50% or less and 20% or more of a radius of the propeller 3 shown in Fig. 24 or 25. By making the radius Rr of the rear end arc portion 11r 50% or less and 20% or more of the radius of the propeller 3, it is possible to increase the interference between the propeller 3 and the duct body 11. If the radius Rr of the rear end arc portion 11r exceeds 50% of the radius of the propeller 3 and becomes large, the effective wake fraction increases and the resistance also increase, and such a situation is not preferable. Since an axis radius of the propeller 3 is in a range of 16 to 18% of the radius of the propeller 3, it is preferable that radius Rr of the rear end arc portion 11r is 20% or more of the radius of the propeller 3. If the radius Rr of the rear end arc portion 11r is set to 50% or less and 20% or more of the radius of the propeller 3, a flow which passes through the duct body 11 and which accelerates is guided to a range of a blade root of the propeller 3 without abutting against a location in the vicinity of 70% to 80% of radius of the propeller 3 at which a maximum thrust force of the propeller 3 is generated, and the average flow speed of a surface of the propeller 3 is made slower, and the effective wake fraction is enhanced.

The support means 12 is composed of struts 12a connected to both sides of the duct body 11 and a mounting portion 12b which mounts the struts 12a on the stern 2. A cross section of each of the strut 12a is formed into a wing shape which is convex inward of the duct body 11. By forming the cross section of the strut 12a into the wing shape, it is possible to utilize the propulsion direction component (thrust component) of the lifting power generated by the wing shape also in the strut 12a.

A duct body-side front-to-rear width Ly of the strut 12a is made larger than its stern-side front-to-rear width Lx. By making the duct body-side front-to-rear width Ly larger than the stern-side front-to-rear width Lx which is on the side of the mounting portion 12b in this manner, it is possible to reduce the resistance of the struts, and to enhance the propulsion force while effectively utilizing the flow.

The ring-shaped mounting portion 12b may be eliminated, and the struts 12a may be mounted directly on an end of the stern 2 which covers the stern tube, or directly on the stern tube of the ship's hull 1.

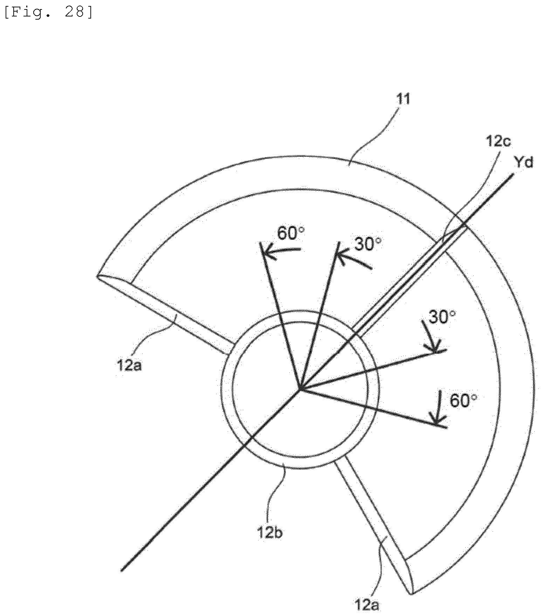

Fig. 28 is a front view of a stern duct according to another embodiment of the second embodiment.

As shown in Fig. 28, the support means 12 may have a strut 12c in addition to the pair of struts 12a connected to both sides of the duct body 11.

Fig. 28 shows a case where the strut 12c is provided along the duct center line Yd. The strut 12c is provided in an angle range from the duct center line Yd to 69°, more preferably in an angle range from the duct center line Yd to 30°. Even if the strut 12c is provided in this manner, it is possible to enhance the strength of the duct body 11, and to enhance the mounting strength of the end of the stern 2 of the duct body 11 and of the mounting strength without increasing resistance of the ship's hull 1.

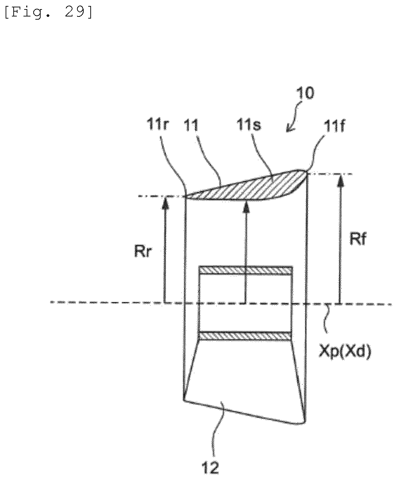

Fig. 29 is a sectional view of a side surface of the stern duct shown from Figs. 24 to 27 or 28.

As shown in Fig. 29, a cross section 11s of the duct body 11 in the longitudinal direction is formed into a wing shape which is convex inward of the duct body 11. By forming the cross section 11s into the wing shape which is convex inward of the duct body 11, lifting power of the ship's hull 1 in the propulsion direction of the ship's hull 1 is generated on the front end side of the duct body 11, and it is possible to enhance the propulsive efficiency.

Further, as shown in Fig. 29, a phantom center axis Xd which connects an arc center of the duct body 11 is made to match with the rotation center axis Xp of the propeller 3. By matching the phantom center axis Xd and the rotation center axis Xp with each other, it becomes easy to design and install the duct body 11.

It is not absolutely necessary that the phantom center axis Xd corresponds to centers of all of the arc surfaces of the duct body 11. For example, radii are slightly different between a center portion and both sides of the duct body 11 in some cases, and a center angle β of the front end arc portion 11f and the center angle β of the rear end arc portion 11r are different from each other in some cases. Therefore, it is unnecessary that the duct body 11 has a perfect arc shape, and may be formed into a substantially arc shape.

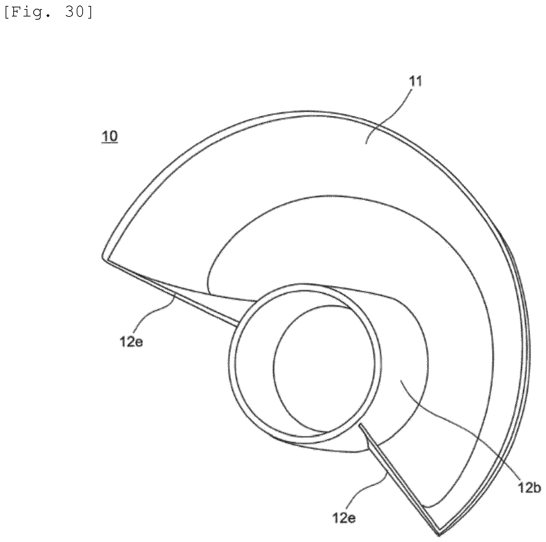

Fig. 30 is a perspective view of a stern duct according to another embodiment of the second embodiment.

A stern duct 10 according to this embodiment uses a twisted shaped strut 12e instead of the strut 12a, and a flow heading for the propeller 3 is brought into counterflow. That is, the strut 12e has a shape twisted in a direction opposite from rotation of the propeller 3. By bringing the flow heading for the propeller 3 into counterflow with respect to the rotation direction of the propeller 3 using the twisted shaped strut 12e, it is possible to enhance the propulsion force of the propeller 3.

It is also possible to employ such configurations that the duct body 11 and one of the strut 12a and strut 12e are mounted on the ship's hull 1, and that both the strut 12a and the strut 12e are not used and the duct body 11 is mounted directly on the ship's hull 1.

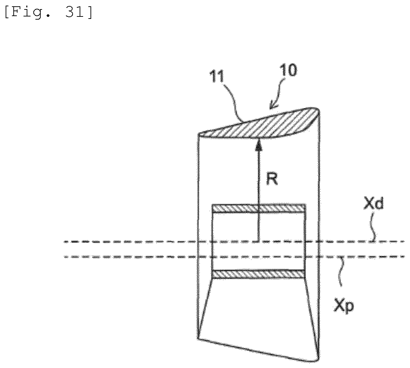

Fig. 31 is a side sectional view of a stern duct according to another embodiment of the second embodiment.

In Fig. 31, a phantom center axis Xd of a duct body 11 is offset from a rotation center axis Xp of the propeller 3. By offsetting the phantom center axis Xd from the rotation center axis Xp in this manner, it is possible to provide a stern duct 10 at a position where a thrust force can be enhanced corresponding to asymmetric flow generated by the ship's hull 1, the stern 2 or the propeller 3.

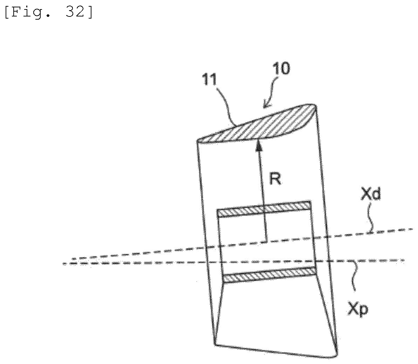

Fig. 32 is a side sectional view of a stern duct according to another embodiment of the second embodiment.

In Fig. 32, in a state where the ship's hull 1 is viewed from side, a phantom center axis Xd of the duct body 11 is inclined with respect to a rotation center axis Xp of the propeller 3. By inclining the phantom center axis Xd with respect to the rotation center axis Xp in the manner, it is possible to mount the stern duct 10 such that a thrust force is enhance corresponding to the flow heading for downward of the stern 2.

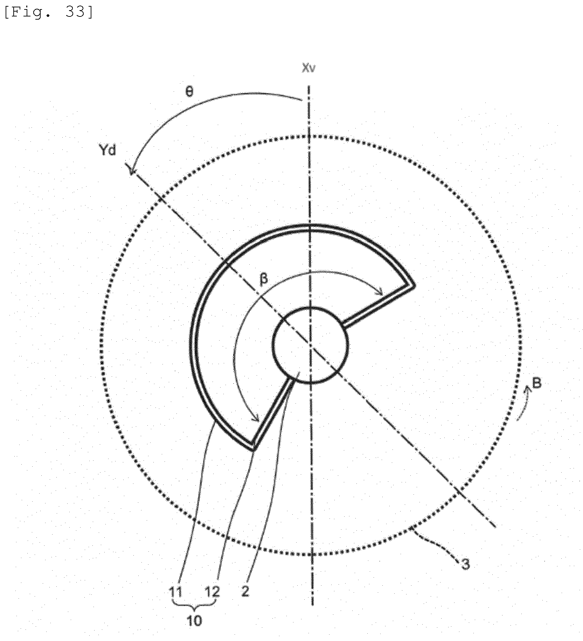

Fig. 33 is an explanatory diagram of a stern duct according to another embodiment of the second embodiment.

Fig. 33 shows a case where the propeller 3 rotates counterclockwise B in a state where the ship's hull 1 is forwardly viewed from backward.

The stern duct 10 of the embodiment is mounted in a state where a center angle β of the duct body 11 is 210° and the inclination angle θ is 60°.

Next, influences exerted on the self-propulsion factors by relations between the flow of the stern and various portions in the circumferential direction of the duct body 11 will be described based on a test result.

In this test, the duct body 11 in which the center angle β is set to 120° was used as a partial duct model, a circumferential direction position (duct installation angle θ) was changed and the self-propulsion test was carried out, and a relation between the circumferential direction portion of the partial duct model and the self-propulsion test was researched

In this test, a partial duct model was placed in a model ship of an enlarged ship, an installation angle (inclination angle θ in this embodiment) of the partial duct model was changed, the self-propulsion test was carried out, and a relation between the installation angle of the partial duct model and the self-propulsion factors was researched.

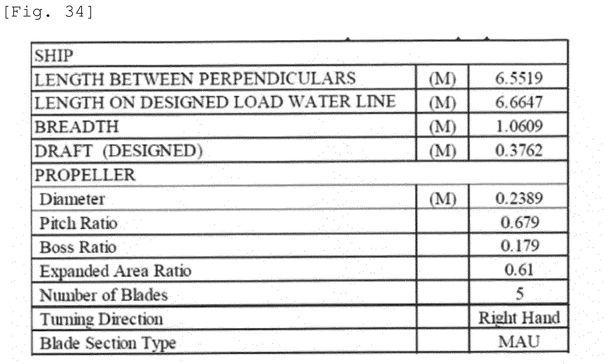

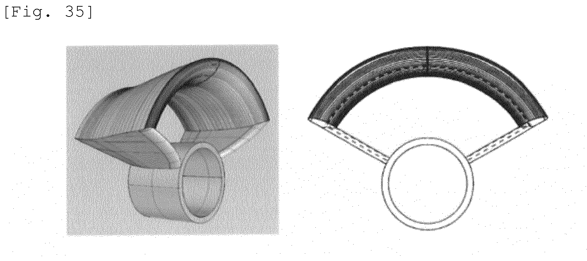

Fig. 34 is a schematic diagram of the enlarged ship model, and the principal items of the propeller model. Fig. 35 is a schematic diagram of the partial duct model.

The partial duct model is explained while calling the strut 12a in the embodiment as a fin. The mounting portion 12b of the embodiment was formed into a ring-shaped member, it was put on the stern tube of the model ship and was installed, and at the time of the self-propulsion test, the ring-shaped portion was rotated, thereby changing the installation angle θ.

Concerning the duct installation angle θ, straightly upward in the vertical direction was set to 0° as viewed from the stern-side, and the angle is rotated rightward (clockwise) . Hence, a position of 12:00 is 0°, a position of 3:00 is 90°, a position of 6:00 is 180°, and a position of 9:00 is 270°.

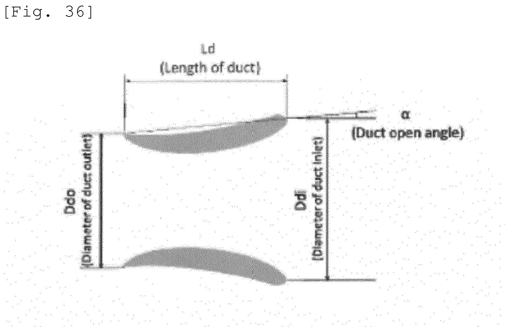

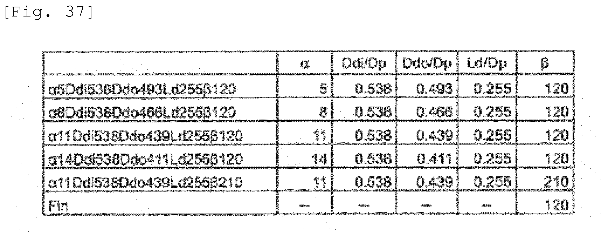

Fig. 36 shows parameters indicating principal items of a tested duct model, and Fig. 37 shows principal items of a tested duct model.

Here, Ddi represents a diameter ratio of a duct inlet with respect to a diameter of the propeller, and Ddo represents a diameter ratio of a duct outlet with respect to a diameter of the propeller. Here, Ddi538 shows that the diameter ratio of the duct inlet with respect to the propeller diameter is 53.8%, and Ddo493 shows that a diameter ratio of the duct outlet with respect to the propeller diameter is 49.3%. Here, α5 shows that an opening angle of the partial duct model is 5°, and β120 shows that a duct has the center angle of 120°.

A duct diameter at the duct inlet was set constant and the opening angle α of the duct was changed. Concerning the partial duct model, a duct length Ld was fixed to 25.5% of the propeller diameter D_{P}, and he opening angle α was changed from 5° to 14° at 3° intervals. A test was carried out for a duct whose center angle of 210° with reference to the test result of the partial duct model. It was considered that a fin for fixing the duct to the ship's hull 1 also influences the self-propulsion factors, a test of a simplicial fin from which a duct portion was removed was also carried out.

The tests were carried out in the Mitaka No. 2 Ship Model Experiment Tank of National Maritime Research Institute. Test speed was set such that it corresponds to Froude number of 0.18. In a tank test of the partial duct model, influence of variation in a load degree of the propeller is prone to be exerted on the thrust deduction factor (1-t). Therefore, the test was carried out while changing the propeller load degree, and self-propulsion factors where a load factor became 1 were obtained by interpolation, and influence of the propeller load degree was eliminated.

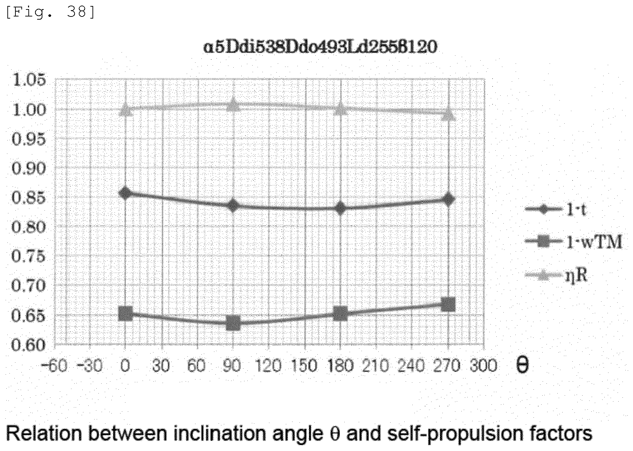

Figs. 38 to 42 show a relation between an installation angle and the self-propulsion factors obtained from the result of the self-propulsion test concerning the fins and the respective partial duct model.

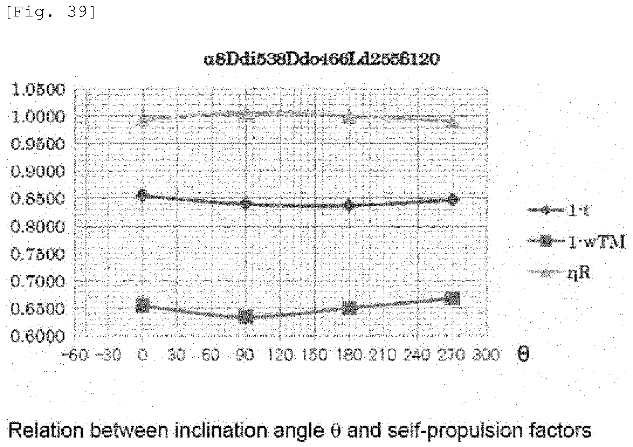

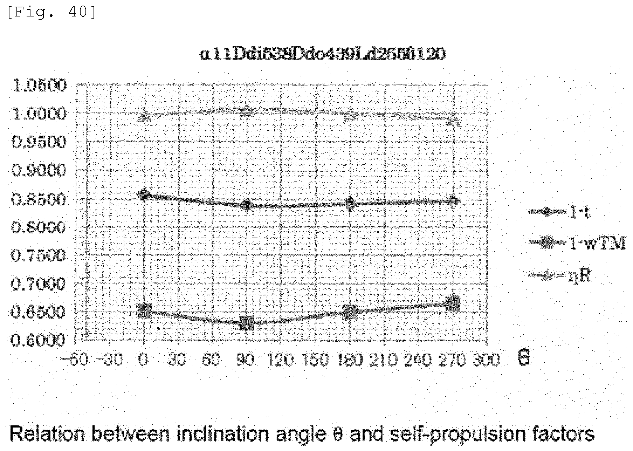

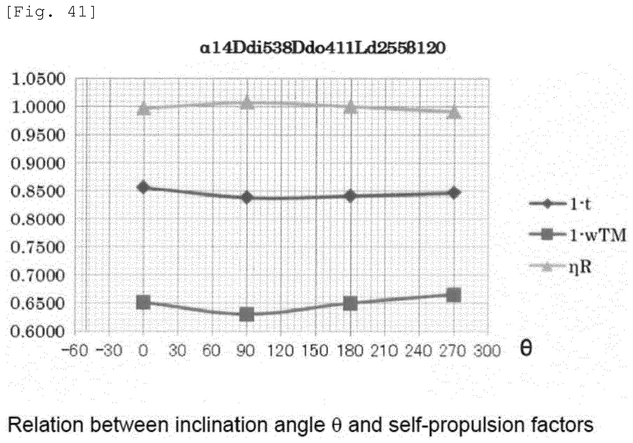

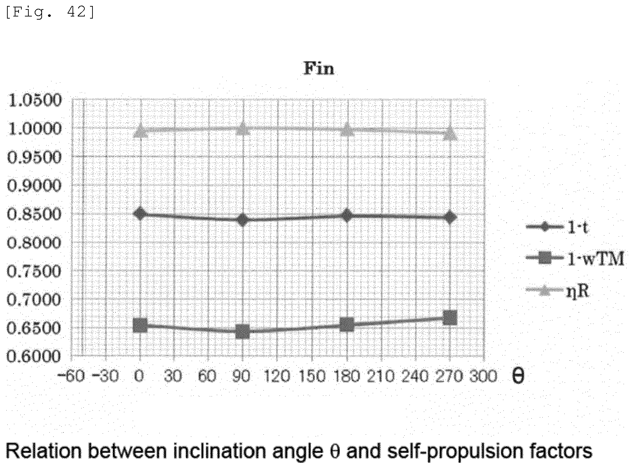

Figs. 38 to 42 are characteristic diagrams showing a relation between a duct installation angle of the duct body and self-propulsion factors, wherein Fig. 38 shows a first model (α5Ddi538Ddo493Ld255β120), Fig. 39 shows a second model (α8Ddi538Ddo466Ld255β120), Fig. 40 shows a third model (α11Ddi538Ddo439Ld255β120), Fig. 41 shows a fourth model (α14Ddi538Ddo411Ld255β120), and Fig. 42 shows a characteristic diagram in a fifth mode (Fin).

As the self-propulsion factors, a thrust deduction factor (1-t), an effective wake fraction (1-wTM), a relative rotative efficiency ratio (ηR) are shown.

In Figs. 38 to 42, a duct installation angle θ=0° is provided by matching the duct center line Yd and the propeller center line Xv in the vertical direction of the propeller 3 in a state where the ship's hull 1 is forwardly viewed from backward. The plus installation angle θ inclines the duct body 11 toward the starboard-side, and the minimum installation angle inclines the duct body 11 toward the port-side. The propeller 3 rotates clockwise A. The vertical axis is based on that there is no duct.

In a partial duct model of any of the opening angle α also, 1-t becomes the maximum when the installation angle is 0°, 1-wTM becomes the minimum when the installation angle is 90° and ηR becomes the maximum. From the standpoint of right and wrong of the self-propulsion factors, 1-t and the other two self-propulsion factors 1-wTM and ηR are inverse relation, and the simplicial fin is also the same. Using the self-propulsion factors obtained by the self-propulsion test, horsepower was estimated, and a reduction rate of delivered power at the inclination angles θ of the partial duct model and the simplicial fin were calculated.

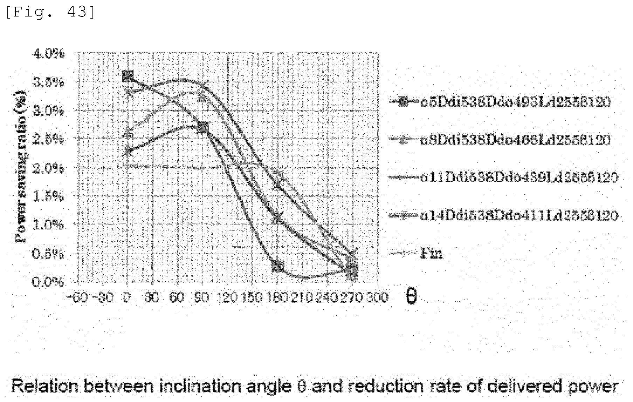

The calculated reduction rate of delivered power is shown in Fig. 43. When the opening angle α is 5°, the reduction rate of delivered power when the installation angle is 0° and the reduction rate of delivered power is the largest, and when the installation angle is 180° and the installation angle is 270°, the horsepower reducing effect is eliminated. At the 1/3 duct of other opening angle α, the most preferable reduction rate of delivered power is shown when the installation angle is 90°, and a next preferable reduction rate of delivered power is shown when the installation angle is 0°, but even when the installation angle is 180°, a reduction ratio of about 1 to 2% is shown. When the installation angle is 270°, there is almost no reduction rate of delivered power. Even only with the fin, a horsepower reducing effect of about 2% appears when the installation angle is 0°, 90°, and 180°, but when the installation angle 270°, there is no horsepower reducing effect almost at all.

To research the influence of the duct installation angle in more detail, a changing width of the installation angle was made small from the installation angle of 0° having high reduction rate of delivered power to the installation angle of 90°, and the self-propulsion test was carried out.

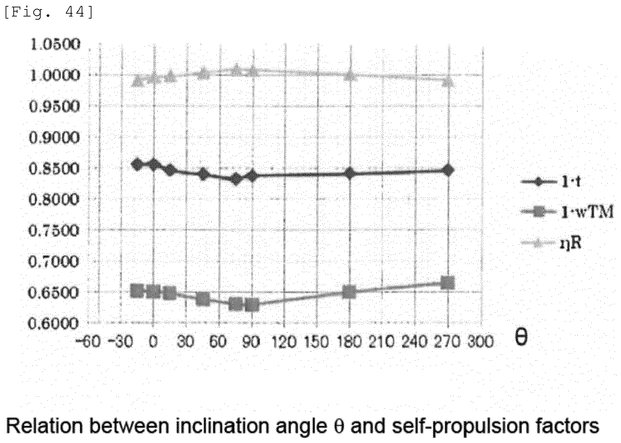

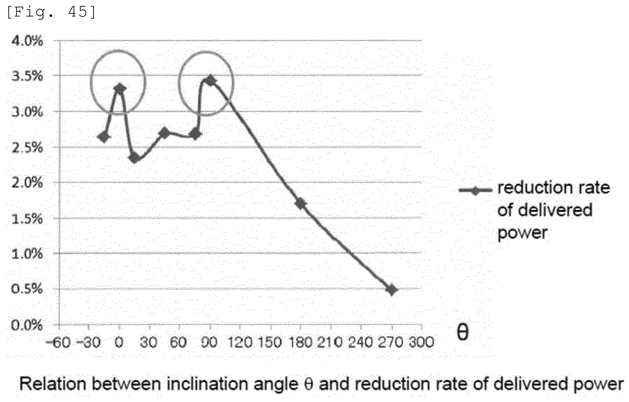

Fig. 44 shows a relation between the inclination angle (duct installation angle) of the duct body and the self-propulsion factors, and Fig. 45 shows a relation between the duct installation angle and the reduction rate of delivered power.

In Figs. 44 and 45, when the duct installation angle θ = 0°, in a state where the ship's hull 1 is forwardly viewed from backward, the propeller center line Xv and the duct center line Yd in the vertical direction of the propeller 3 are made to match with each other. The plus installation angle θ inclines the duct body 11 toward the starboard-side, and the plus installation angle θ inclines the duct body 11 toward the port-side. The propeller 3 rotates clockwise A. The vertical axis is based on that there is no duct.

Here, 1-t becomes the maximum when the installation angle is 0°, and becomes the maximum when the installation angle is 75°. Further, 1-wTM becomes the minimum when the installation angle is 75°, and becomes the maximum when the installation angle is 270°. The ηR becomes the maximum when the installation angle is 75°, and becomes minimum when the installation angle is -15°. The installation angle having the excellent reduction rate of delivered power has two peaks, i.e., 0° and 90°. It is found that when the installation angle is 0°, 1-t become good, and when the installation angle of 90°, 1-wTM and ηR become good.

Figs. 44 and 45 show preferable installation angle positions using circle.

If the test result of the partial duct model (center angle β is 120°) is seen, a horsepower reducing effect when the installation angle is 0° and when the installation angle is 90°. When the installation angle is 180°, the horsepower reducing effect becomes smaller than that of the simplicial fin. When the installation angle is 270°, the horsepower reducing effect is extremely low. Hence, partial duct model when the duct installation angle is 0° and partial duct model when the duct installation angle was 90° are combined, and if the center angle β was set to 210° in the partial duct model, it was considered that the effect is large, the self-propulsion test was carried out.

From a test result in the partial duct model (center angle β was 120°), when the opening angle was 11°, the installation angle was 0°, the reduction rate of delivered power is 3.3%, the installation angle was 90° and the reduction rate of delivered power was 3.4%, and the horsepower reducing effect was high in a comprehensive manner. Therefore, the self-propulsion test was carried out based on the 210° duct of the opening angle of 11°. A schematic diagram of the 210° duct of the opening angle of 11° is shown in Fig. 27.

As a result of the self-propulsion test, the self-propulsion factors become intermediate values of the partial duct model when the installation angles are 0° and 90°, and the reduction rate of delivered power was larger than 3.9% and both of them.

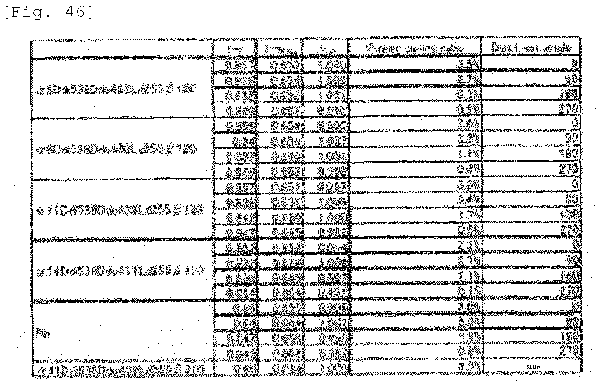

Fig. 46 shows all of results of the self-propulsion tests using the partial duct model carried out the embodiment.

As a result of the self-propulsion test carried out using the partial duct model, the following facts were found.

When the propeller 3 rotates in the rightward direction, 1-t becomes the largest when the partial duct model is at a position of 0° (12:00) as backwardly viewing the partial duct model. On the other hand, 1-wTM becomes the largest and ηR becomes the smallest. When the partial duct model is at a position of 90° (3:00) when the partial duct model is viewed from backward 1-t becomes the smallest, and 1-wTM also becomes the smallest, and ηR becomes the largest. That is, from the standpoint of right and wrong of the self-propulsion factors, 1-t and the other two self-propulsion factors 1-wTM and ηR are inverse relation. These phenomena are synthesized, the energy-saving effects at the position of 0° (12:00) or at the position of 90° (3:00) are high, and the energy-saving effect of the 210° duct obtained by combining these two positions is the highest. Although the reduction rate of delivered power was 3.9% with the 210° duct, when the entire circumference duct in which only the angle range was set to 360° under the same condition, the reduction rate of delivered power was 3.5%, and it was confirmed that the 210° duct has a reduction rate of delivered power which is larger than that of the entire circumference duct.

From the above result, the duct body 11 is formed into the arc shape having an angle range from 180° to 270°, the duct center line Yd of the duct body 11 has an inclination angle θ in an angle range of 30° or more and 60° to the duct body 11 with respect to the propeller center line Xv in the vertical direction of the propeller 3. According to this, since it is possible to reliably cover two peaks of reduction rate of delivered power in Fig. 45, the duct body 11 and the support means 12 can face a region having the reduction rate of delivered power, it is possible to provide a stern duct 10 having high energy-saving effect.

It is more preferable that the angle range of the duct body 11 is formed into an arc shape from 225° to 255°, thereby enhancing the hull efficiency without increasing the resistance of the ship's hull 1.

It is preferable that the radius Rr of the rear end arc portion 11r formed on the rear end of the duct body 11 is 50% or less and 20% or more of the radius of the propeller 3.

Next, a design method of the stern duct according to the embodiment will be described below.

Fig. 11 which is also used for explanation of the first embodiment is a side view of principle items of a ship's hull and a three-dimensional shape concerning the ship's hull, and Fig. 12 is a diagram showing duct principal items of an entire circumference having the same radius as the stern duct of the embodiment, and a three-dimensional shape thereof.

In this embodiment, the ship's hull in which an enlarged degree of the stern of Panamax-size ·Bulk Carrier (PxBC) was increased was used.

When the stern duct 10 of the embodiment is designed, an entire circumference duct having the same radius as that of the arc duct body 11 is set.

Here, a dust having a shape based on a so-called Weather adapted Duct (WAD) was used as the entire circumference duct.

In Fig. 12, D_{T.E.} represents a duct rear end diameter, D_{P} represents a propeller diameter, L_{d} represents a duct blade section cord length, and α represents an opening angle of a wing cross section.

Fig. 13 which was also used for explanation of the first embodiment shows propeller principal items concerning the propeller to be used.

In Fig. 13, H/D_{P} represents a pitch ratio, aE represents a developed area ratio, and Z represents the number of blades.

Fig. 14 which was also used for explanation of the first embodiment shows mounting positions of the duct and the propeller with respect to the ship's hull.

A coordinate origin is set at a bow normal (FP) of the ship's hull 1, a direction of the stern normal (AP) from FP is set as a positive direction of x-axis, a direction from port-side to starboard-side is set as a positive direction of y-axis, and a direction from keel to deck is set as a positive direction of y-axis. A ship's length is set to 1 (i.e., x=0.0 is Fp, and x=1.0 is AP).

As shown in Fig. 14, a rear end of the duct has a clearance of about 5%DP of a front edge of the propeller, and a center of the duct matches with a shaft center line.

Next, a ship shape · a duct · a propeller are set, and resistance and self-propulsion are calculated by calculating a numeric value of the ship's hull using the entire circumference duct.

Analysis of CFD (Computational Fluid Dynamics) is carried out using the ship shape · the duct · the propeller shown in Fig. 11 to 14.

As a result of CFD analysis, in the case of a ship shape having a duct, resistance is not increased and hull efficiency is enhanced by about 3.2% as compared with a ship shape having no duct. It is considered that a reason why total resistance coefficient is not increased almost at all although the ship's hull 1 is provided with the duct is that the duct itself outputs a thrust force.

Next, a hydrodynamic force distribution of an inner surface of the entire circumference duct is obtained from a calculation result of resistance and self-propulsion.

Fig. 15 which was also used for explaining the first embodiment shows a thrust component of the entire circumference duct and a circumferential direction distribution of a resistance distribution.

In Fig. 15, in the case of the inclination angle θ, a position of 12:00 as viewing the entire circumference duct from backward is defined as 0°, and a clockwise direction from the position of 12:00 is defined as positive. In Fig. 15, a vertical axis Ctx is x-direction fluid force, a positive value (higher than 0 line) becomes resistance, and a negative value (lower than 0 line), it becomes propulsion force.

As shown in Fig. 15, when the propeller 3 is not operated (dotted line in the drawing), an x-direction fluid force (Ctxlduct) is in a positive value over the entire circumference, i.e., is resistance (resistance).

However, if the propeller 3 is operated, Ctxlduct acts as a negative value in the vicinity of 0°<θ<45°, 288°<θ<360°, i.e., as thrust. It is considered that when the propeller 3 is operated, this thrust component is a cause not increasing the total resistance coefficient even when the duct is mounted.

Fig. 16 which was used for explanation of the first embodiment is a contour line diagram of the thrust distribution and the resistance distribution on a surface of the entire circumference duct, and Fig. 16 three-dimensionally shows how the resistance/thrust component shown in Fig. 15 are distributed on a duct surface.

It can be found that the thrust component of duct shown in Fig. 15 is mainly generated inside of an upper surface of a front end of the duct (region Z shown by arrow in drawing) .

That is, the region Z where the thrust component is generated is a sector portion surrounded by an angle range of 0°<β<180° if the center angle of the sector shape is defined as β. Although the thrust itself is generated also in the vicinity of inside of the side surface of the duct, since resistance larger than this thrust acts on the duct outer side of this portion, as the entire fluid force obtained by integrating in the duct cord direction, the inclination angle θ shown in Fig. 15 becomes the resistance as shown in the vicinity of 90°.

After the hydrodynamic force distribution of the inner surface of the entire circumference duct is obtained from the calculation result of resistance and self-propulsion, a shape of the arc duct body 11 is determined from the entire circumference duct based on the hydrodynamic force distribution. Here, the hydrodynamic force distribution is a thrust distribution and a resistance distribution. Further, flow

Flow speed · flow direction distribution from a back side of the entire circumference duct to the propeller surface may be obtained. By obtaining the flow speed · flow direction distribution, it is possible to design while taking the effective wake fraction into account. It is possible to design using one of or both of the flow speed · flow direction distribution and the hydrodynamic force distribution of the inner surface, but if both of them are used, it is possible to design in more detail.

If a step of setting the number of mounting operations of the support means 12 is provided and a step of calculating the resistance and self-propulsion by the numeric value calculation of the ship's hull 1 using a condition of the set support means 12 is executed, it is possible to design while taking the influence of instruction means 12 into account.

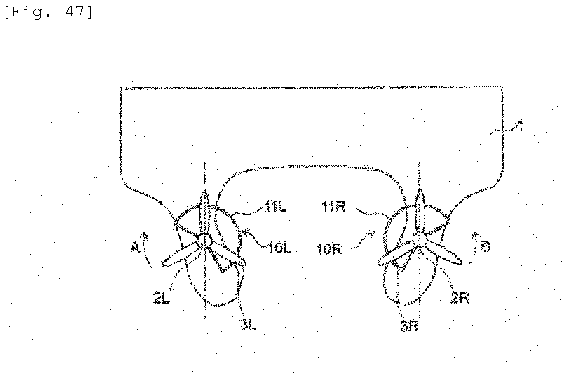

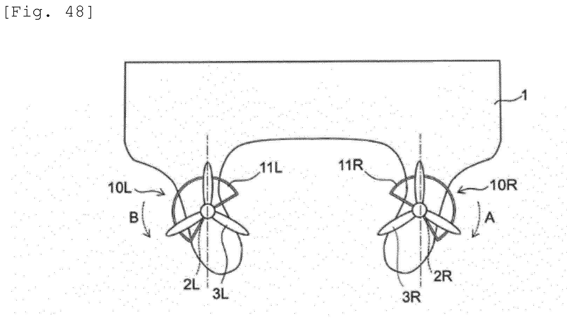

Figs. 47 and 48 are front views of essential portions showing the biaxial stern catamaran type ship having the stern duct as forwardly viewed from backward.

In Figs. 47 and 48, in the ship's hull 1, the stern tube 2R of the starboard-side skeg is provided with the starboard-side propeller 3R, and the stern tube 2L of the port-side skeg is provided with the port-side propeller 3L.

In Fig. 47, the starboard-side propeller 3R rotates counterclockwise B, the port-side propeller 3L rotates clockwise A, and shows they inward rotate.

In the case of the biaxial stern catamaran type ship by the inward rotation, the duct body 11R of the starboard-side stern duct 10R corresponding to the starboard-side propeller 3R is placed at the upper left quadrant in an inclination manner, and the duct body 11L of the port-side stern duct 10L corresponding to the port-side propeller 3L is placed at the upper right quadrant in an inclination manner. According to this, it is possible to increase the thrust deduction factor or relative rotative efficiency, and to reduce the effective wake fraction.

Fig. 48 shows that the starboard-side propeller 3R rotates clockwise A, the port-side propeller 3L rotates counterclockwise B, and they outward rotate.

In the case of the biaxial stern catamaran type ship by the outward rotation, the starboard-side stern duct 10R corresponding to the starboard-side propeller 3R places the duct body 11R at the upper right quadrant an inclining manner, and the port-side stern duct 10L corresponding to the port-side propeller 3L places the duct body 11L at the upper left quadrant in an inclining manner. According to this, it is possible to increase the thrust deduction factor or relative rotative efficiency and to enhance the relative rotative efficiency, and to reduce the effective wake fraction.

The stern duct 10 of the embodiment can also be applied to the biaxial stern catamaran type ship's hull 1, resistance applied to the duct body 11 can be reduced, and it is possible to provide a biaxial stern catamaran type ship capable of reducing resistance applied to the duct body 11 and having high an energy saving effect.

In the biaxial stern catamaran type ship and the one shaft type ship, to enhance the propulsive efficiency while effectively utilizing the stern flow, a propulsion shaft of the propeller is offset or offset in position from centers of a skeg or a stern provided on left and right sides in some cases. In such a case, it is both possible to deviate or not deviate the position of the stern duct.

The stern duct 10 of the embodiment can be retrofitted to an existing ship's hull 1 Therefore, also in the existing ship also, resistance can be reduced by the stern duct 10 of the embodiment, and the enhancement of the energy-saving effect can be utilized.

Although the stern duct 10 has been described in each of the embodiments, as shown by the test result, the duct body 11 may not be provided, and only by the pair of struts 12a which support both ends of the duct body 11 can exert the energy-saving effect only by improving the hull efficiency without increased the resistance of the ship's hull 1.

That is, according to a stern attachment of another embodiment, a pair of struts 12a which support an arc phantom duct body is mounted on a stern 2 such that an angle between the pair of struts 12a falls in an angle range from 180° to 270°. In a state where the ship's hull 1 is forwardly viewed from backward, a strut center line of the pair of strut 12a has an inclination angle θ in the rotation direction of the propeller 3 with respect to the propeller center line Xv in the vertical direction of the propeller 3.

It is preferable that a radius of the phantom rear end arc portion is in a range of 50% or less and 20% or more of the radius of the propeller 3 shown in Fig. 24 or 25. By making the radius of the phantom rear end arc portion not more than 50% and not less than 20% of the radius of the propeller 3, it is possible to increase the interference between the propeller 3 and the phantom duct body. If the radius of the phantom rear end arc portion exceeds 50% of the radius of the propeller 3 and increases, the effective wake fraction rises. Since a shaft radius of the propeller 3 is generally in a range of 16 to 18% of the radius of the propeller 3, it is preferable that the radius of the phantom rear end arc portion is 20% or more of the radius of the propeller 3.

According to the stern attachment of the embodiment, if the inclination angle θ of the strut center line in the rotation direction of the propeller 3 is set to the angle range of 30° or more and 60° or less, the pair of struts 12a can face a region having a high reduction rate of delivered power where two peaks of the reduction rate of delivered power in Fig. 45 exist. Hence, it is possible to provide a stern attachment having high energy-saving effect. The pair of struts 12a having the small angle range can face a position which is higher than the rotation center axis Xp of the propeller 3 and especially where a propulsion direction component (thrust component) can largely be obtained.

It is easy to design and install the stern attachment of the embodiment when the phantom center axes Xd of the pair of struts 12a are made to match with the rotation center axis Xp of the propeller 3.

According to the stern attachment of the embodiment, when the phantom center axes Xd of the pair of struts 12a are offset from the rotation center axis Xp of the propeller 3, the pair of struts 12a can be offset to a position where the thrust force can be enhanced corresponding to asymmetric flow generated from the ship's hull 1 or the propeller 3.

According to the stern attachment of the embodiment, when the phantom center axes Xd of the pair of struts 12a are inclined with respect to the rotation center axis Xp of the propeller 3, the pair of struts 12a can be mounted such that a thrust force can be enhanced in a state where the ship's hull 1 is viewed from a side.

According to the stern attachment of the embodiment, when a cross section of the strut 12a is formed into a wing shape which is convex inward of the duct body 11, it is possible to utilize the propulsion direction component (thrust component) of the lifting power generated by the wing shape.

According to the stern attachment of the embodiment, when the strut 12e is formed into the twisted shape and flow heading for the propeller 3 is made as counterflow with respect to the rotation direction of the propeller 3, it is possible to enhance the propulsion force.

According to the stern attachment of the embodiment, when a phantom duct body-side front-to-rear width Ly of each of the struts 12a is made larger than the stern-side front-to-rear width Lx, it is possible to reduce the resistance of the strut 12a and to enhance the propulsion force.

According to the ship having the stern attachment of the present invention, it is possible to provide a ship in which resistance applied to the strut 12a is reduced and an energy-saving effect is high.

When the ship's hull 1 is a biaxial stern catamaran type, it is possible to provide a biaxial stern two-barrel type ship in which resistance applied to the struts 12a is reduced and an energy-saving effect is high.

When the ship's hull 1 is an existing ship's hull and the struts 12a are retrofitted to the ship's hull 1, it is possible to reduce the resistance and to enhance the energy-saving effect.

### [INDUSTRIAL APPLICABILITY]

The present invention can be applied to a stern duct having a stern of a general ship especially including a low speed enlarged ship, and even if a duct body is added, there is an energy-saving effect by improving hull efficiency without increasing resistance of a ship's hull.

### [EXPLANATION OF SYMBOLS]

- 1: ship's hull
- 2: stern
- 3: propeller
- 10: stern duct
- 11: duct body
- 11s: cross section
- 12: support means
- Xp: rotation center axis
- Xv: center line in vertical direction

- β: center angle (angle range)

## Claims

1. A stern duct (10) mounted in front of a propeller (3) mounted on a stern (2) of a ship's hull (1),
**characterised in that**
a duct body (11) is formed into an arc shape of an angle range (β) from 90° to 140°,
a radius (Rr) of a rear end arc portion (11r) formed on a rear end of the duct body (11) is set to 50% or less and 20% or more of a radius of the propeller (3), and
the duct body (11) is mounted on the stern (2) by support means (12) such that a duct center line (Yd) of the duct body (11) inclines in a rotation direction of the propeller (3) with respect to a propeller center line (Xv) in a vertical direction of the propeller (3) in a state where the ship's hull (1) is forwardly viewed from backward.

2. The stern duct (10) according to claim 1, wherein an inclination angle (θ) of the propeller (3) in the rotation direction is set to an angle range larger than 0° and 60° or less in the rotation direction of the propeller (3) with respect to a part of the propeller center line (Xv) located higher than a center axis of the propeller (3).

3. A stern duct (10) mounted in front of a propeller (3) mounted on a stern (2) of a ship's hull (1),
**characterized in that**
a duct body (11) is formed into an arc shape of an angle range (β) from 180° to 270°.
a radius (Rr) of a rear end arc portion (11r) formed on a rear end of the duct body (11) is set to 50% or less and 20% or more of a radius of the propeller (3),
the duct body (11) is mounted on the stern (2) by support means (12) such that a duct center line (Yd) of the duct body (11) inclines in a rotation direction of the propeller (3) with respect to a propeller center line (Xv) in a vertical direction of the propeller (3) in a state where the ship's hull (1) is forwardly viewed from backward, and
an inclination angle (θ) of the propeller (3) in the rotation direction is set to an angle range of 30° or more and 60° or less in the rotation direction of the propeller (3) with respect to a part of the propeller centerline (Xv) located higher than our center axis of the propeller (3).

4. The stern duct (10) according to claim 1 or 3, wherein a cross section of the duct body (11) in its longitudinal direction is formed into a wing shape which is convex inward of the duct body (11).

5. The stern duct (10) according to claim 1 or 3, wherein the radius (Rr) of the rear end arc portion (11r) is made smaller than a radius (Rf) of a front end arc portion (11f) formed on a front end.

6. The stern duct (10) according to claim 1 or 3, wherein a phantom center axis (Xd) of the duct body (11) matches with a rotation center axis (Xp) of the propeller (3).

7. The stern duct (10) according to claim 1 or 3, wherein a phantom center axis (Xd) of the duct body (11) is offset from a rotation center axis (Xp) of the propeller (3).

8. The stern duct (10) according to claim 1 or 3, wherein a phantom center axis (Xd) of the duct body (11) is inclined with respect to a rotation center axis (Xp) of the propeller (3) in a state where the ship's hull (1) is viewed from side.

9. The stern duct (10) according to claim 1 or 3, wherein the duct body (11) is mounted, through a strut (12a) as the support means (12), on a stern tube of the ship's hull (1) or an end of the stern which covers the stern tube.

10. The stern duct (10) according to claim 9, wherein a cross section of the strut (12a) is formed into a wing shape which is convex inward of the duct body (11).

11. The stern duct (10) according to claim 9, wherein the strut (12e) is formed into a twisted shape, thereby bringing a flow heading for the propeller (3) into a counterflow with respect to the rotation direction of the propeller (3).

12. The stern duct (10) according to claim 9, wherein a duct body-side front-to-rear width (Ly) of the strut (12a) is formed larger than a stern-side front-to-rear width (Lx) of the strut (12a).

13. A stern attachment mounted in front of a propeller (3) mounted on a stern (2) of a ship's hull (1),
**characterized in that**
a pair of struts (12a) which support an arc phantom duct body are mounted on the stern (2) such that an angle between the pair of struts (12a) falls in the angle range (β) from 180° to 270°,
a radius of a phantom rear end arc portion (11r) formed on a rear end of the phantom duct body is set to 50% or less and 20% or more of a radius of the propeller (3),
a strut center line between the pair of struts (12a) inclines in a rotation direction of the propeller (3) with respect to a propeller center line (Xv) in a vertical direction of the propeller in a state where the ship's hull (1) is forwardly viewed from backward, and
an inclination angle (θ) of the propeller (3) in the rotation direction is set to an angle range from 30° or more to 60° or less in the rotation direction of the propeller (3) with respect to a part of the propeller center line (Xv) located higher than a center axis of the propeller (3).

14. A design method of the stern duct (10) according to claim 1 or 3, comprising:
when the stern duct (10) is to be designed,
a step of setting an entire circumference duct having a same radius as that of the arc duct body (11)_;
a step of carrying out calculation of resistance and self-propulsion simulations of the ship's hull (1) using the entire circumference duct;
a step of obtaining, from a result of calculation of the resistance and self-propulsion, a hydrodynamic force distribution of the ship's hull (1) propulsion direction acting on a surface of the entire circumference duct and/or flow speed · flow direction distribution from behind the entire circumference duct to a propeller surface; and
a step of determining a shape of the arc duct body (11) from the entire circumference duct based on the hydrodynamic force distribution and/or the flow speed · flow direction distribution from behind the entire circumference duct to the propeller surface.

15. The design method of the stern duct (10) according to claim 14, further comprising a step of setting a mounting number of the support means (12), wherein
the step of calculating the resistance and self-propulsion by the numeric value calculation of the ship's hull (1) is executed using a set condition of the support means (12).

16. The design method of the stern duct (10) according to claim 14, wherein the hydrodynamic force distribution is a thrust distribution and a resistance distribution.

17. A ship having the stern duct (10) according to claim 1 or 3 is provided on the stern (2).

18. The ship having the stern duct (10) according to claim 17, wherein the ship's hull (1) is a biaxial stern catamaran type.

19. The ship having the stern duct (10) according to claim 17, wherein the ship's hull (1) is an existing ship's hull, and the stern duct (10) is retrofitted to the ship's hull (1).

## Patentansprüche

1. Achterkanal (10), der vor einem an einem Heck (2) eines Schiffsrumpfes (1) montierten Propeller (3) montiert ist,
**dadurch gekennzeichnet, dass**
ein Kanalkörper (11) in eine Bogenform eines Winkelbereiches (β) von 90° bis 140° ausgebildet ist,
ein Radius (Rr) eines hinteren Bogenabschnittes (11r), der an einem Hinterende des Kanalkörpers (11) ausgebildet ist, auf 50% oder weniger und 20% oder mehr eines Radius des Propellers (3) eingestellt ist, und
der Kanalkörper (11) an dem Heck (2) durch eine Abstützvorrichtung (12) derart angebracht ist, dass sich eine Kanalmittellinie (Yd) des Kanalkörpers (11) in eine Drehrichtung des Propellers (3) bezüglich einer Propellermittellinie (Xv) in senkrechter Richtung des Propellers (3) in einem Zustand, in dem der Schiffsrumpf (1) von hinten nach vorne betrachtet wird, neigt.

2. Achterkanal (10) nach Anspruch 1, wobei ein Neigungswinkel (θ) des Propellers (3) in der Drehrichtung auf einen Winkelbereich eingestellt ist, der größer als 0° und 60° oder weniger in der Drehrichtung des Propellers (3) bezüglich eines Teils der Propellermittellinie (Xv) ist, der höher als eine Mittelachse des Propellers (3) liegt.

3. Achterkanal (10), der vor einem an einem Heck (2) eines Schiffsrumpfes (1) montierten Propeller (3) montiert ist,
**dadurch gekennzeichnet, dass**
ein Kanalkörper (11) in eine Bogenform eines Winkelbereiches (β) von 180° bis 270° ausgebildet ist,
ein Radius (Rr) eines hinteren Bogenabschnittes (11r), der an einem Hinterende des Kanalkörpers (11) ausgebildet ist, auf 50% oder weniger und 20% oder mehr eines Radius des Propellers (3) eingestellt ist,
der Kanalkörper (11) an dem Heck (2) durch eine Abstützvorrichtung (12) derart angebracht ist, dass sich eine Kanalmittellinie (Yd) des Kanalkörpers (11) in einer Drehrichtung des Propellers (3) bezüglich einer Propellermittellinie (Xv) in senkrechter Richtung des Propellers (3) in einem Zustand, in dem der Schiffsrumpf (1) von hinten nach vorne betrachtet wird, neigt, und
ein Neigungswinkel (θ) des Propellers (3) in der Drehrichtung auf einen Winkelbereich von 30° oder mehr und 60° oder weniger in der Drehrichtung des Propellers (3) bezüglich eines Teils der Propellermittellinie (Xv) eingestellt ist, der höher als eine Mittelachse des Propellers (3) liegt.

4. Achterkanal (10) nach Anspruch 1 oder 3, wobei ein Querschnitt des Kanalkörpers (11) in seiner Längsrichtung in einer Flügelform ausgebildet wird, welche einwärts des Kanalkörpers (11) konvex ist.

5. Achterkanal (10) nach Anspruch 1 oder 3, wobei der Radius (Rr) des hinteren Bogenabschnittes (11r) kleiner ausgebildet wird als ein Radius (Rf) eines an einem Vorderende ausgebildeten vorderen Bogenabschnittes (11f).

6. Achterkanal (10) nach Anspruch 1 oder 3, wobei eine Phantommittelachse (Xd) des Kanalkörpers (11) mit einer Drehmittelachse (Xp) des Propellers (3) übereinstimmt.

7. Achterkanal (10) nach Anspruch 1 oder 3, wobei eine Phantommittelachse (Xd) des Kanalkörpers (11) gegenüber einer Drehmittelachse (Xp) des Propellers (3) versetzt ist.

8. Achterkanal (10) nach Anspruch 1 oder 3, wobei eine Phantommittelachse (Xd) des Kanalkörpers (11) bezüglich einer Drehmittelachse (Xp) des Propellers (3) in einem Zustand, in dem der Schiffsrumpf (1) von der Seite betrachtet wird, geneigt ist.

9. Achterkanal (10) nach Anspruch 1 oder 3, wobei der Kanalkörper (11) durch eine Strebe (12a) als Abstützvorrichtung (12) an einem Achterrohr des Schiffsrumpfes (1) oder einem Ende des Hecks, das das Achterrohr verdeckt, montiert ist.

10. Achterkanal (10) nach Anspruch 9, wobei ein Querschnitt der Strebe (12a) in einer Flügelform ausgebildet wird, welche einwärts des Kanalkörpers (11) konvex ist.

11. Achterkanal (10) nach Anspruch 9, wobei die Strebe (12e) in einer gedrehten Form ausgebildet wird, wodurch eine Strömung in Richtung des Propellers (3) in eine Gegenströmung bezüglich der Drehrichtung des Propellers (3) gebracht wird.

12. Achterkanal (10) nach Anspruch 9, wobei eine kanalkörperseitige Breite (Ly) von vorne nach hinten der Strebe (12a) größer als eine heckseitige Breite (Lx) von vorne nach hinten der Strebe (12a) ausgebildet ist.

13. Achterbefestigung, die vor einem an einem Heck (2) eines Schiffsrumpfes (1) montierten Propeller (3) montiert ist,
**dadurch gekennzeichnet, dass**
zwei Streben (12a), welche einen bogenförmigen Phantomkanalkörper abstützen, an dem Heck (2) derart angebracht sind, dass ein Winkel zwischen den zwei Streben (12a) in den Winkelbereich (β) von 180° bis 270° fällt,
ein Radius eines hinteren Phantombogenabschnittes (11r), der an einem Hinterende des Phantomkanalkörpers ausgebildet ist, auf 50% oder weniger und 20% oder mehr eines Radius des Propellers (3) eingestellt ist,
sich eine Strebenmittellinie zwischen den zwei Streben (12a) in eine Drehrichtung des Propellers (3) bezüglich einer Propellermittellinie (Xv) in senkrechter Richtung des Propellers in einem Zustand, in dem der Schiffsrumpf (1) von hinten nach vorne betrachtet wird, neigt, und
ein Neigungswinkel (θ) des Propellers (3) in der Drehrichtung auf einen Winkelbereich von 30° oder mehr bis 60° oder weniger in der Drehrichtung des Propellers (3) bezüglich eines Teils der Propellermittellinie (Xv) eingestellt ist, der höher als eine Mittelachse des Propellers (3) liegt.

14. Konstruktionsverfahren des Achterkanals (10) nach Anspruch 1 bis 3, aufweisend:
wenn der Achterkanal (10) konstruiert werden soll,
einen Schritt des Einstellens eines Gesamtumfangskanals mit demselben Radius wie dem des bogenförmigen Kanalkörpers (11);
einen Schritt des Durchführens einer Berechnung von Widerstands- und Eigenantriebssimulationen des Schiffsrumpfes (1) unter Einsatz des Gesamtumfangskanals;
einen Schritt des Erhaltens, aus einem Ergebnis der Berechnung des Widerstands und Eigenantriebes, einer hydrodynamischen Kraftverteilung der Antriebsrichtung des Schiffsrumpfes (1), die eine Fläche des Gesamtumfangskanals beaufschlagt, und/oder einer Verteilung von Strömungsgeschwindigkeit · Strömungsrichtung von hinter dem Gesamtumfangskanal zu einer Propelleroberfläche; und
einen Schritt des Bestimmens einer Form des bogenförmigen Kanalkörpers (11) aus dem Gesamtumfangskanal auf der Basis der hydrodynamischen Kraftverteilung und/oder der Verteilung von Strömungsgeschwindigkeit · Strömungsrichtung von hinter dem Gesamtumfangskanal zu der Propelleroberfläche.

15. Konstruktionsverfahren des Achterkanals (10) gemäß Anspruch 14, ferner aufweisend einen Schritt des Einstellens einer Montagezahl der Abstützvorrichtung (12),
wobei
der Schritt des Berechnens des Widerstandes und Eigenantriebes durch die Zahlenwertberechnung des Schiffsrumpfes (1) unter Einsatz einer festgelegten Bedingung der Abstützvorrichtung (12) durchgeführt wird.

16. Konstruktionsverfahren des Achterkanals (10) nach Anspruch 14, wobei die hydrodynamische Kraftverteilung aus einer Schubverteilung und einer Widerstandsverteilung besteht.

17. Schiff mit dem am Heck (2) vorgesehenen Achterkanal (10) nach Anspruch 1 oder 3.

18. Schiff mit dem Achterkanal (10) nach Anspruch 17, wobei der Schiffsrumpf (1) vom Typ eines Katamarans mit zweiachsigem Heck ist.

19. Schiff mit dem Achterkanal (10) nach Anspruch 17, wobei der Schiffsrumpf (1) ein bestehender Schiffsrumpf ist und der Achterkanal (10) an dem Schiffsrumpf (1) nachgerüstet wird.

## Revendications

1. Conduit de poupe (10) monté à l'avant d'une hélice (3) montée sur une poupe (2) d'une coque de bateau (1),
**caractérisé en ce que**
un corps de conduit (11) est formé dans une forme d'arc d'un intervalle d'angle (β) de 90° à 140°,
un rayon (Rr) d'une portion d'arc d'extrémité arrière (11r) formée sur une extrémité arrière du corps de conduit (11) est fixé à 50 % ou inférieur et 20 % ou supérieur d'un rayon de l'hélice (3), et
le corps de conduit (11) est monté sur la poupe (2) par un moyen de support (12) de sorte qu'une ligne de centre de conduit (Yd) du corps de conduit (11) s'incline dans une direction de rotation de l'hélice (3) par rapport à une ligne de centre d'hélice (Xv) dans une direction verticale de l'hélice (3) dans un état où la coque de bateau (1) est vue de l'arrière vers l'avant.

2. Conduit de poupe (10) selon la revendication 1, dans lequel un angle d'inclinaison (θ) de l'hélice (3) dans la direction de rotation est fixée dans un intervalle d'angle plus large que 0° et de 60° ou inférieur dans la direction de rotation de l'hélice (3) par rapport à une partie de la ligne de centre d'hélice (Xv) disposée plus haut qu'un axe de centre de l'hélice (3).

3. Conduit de poupe (10) monté à l'avant d'une hélice (3) montée sur une poupe (2) d'une coque de bateau (1),
**caractérisé en ce que**
un corps de conduit (11) est formé dans une forme d'arc d'un intervalle d'angle (β) de 180° à 270°,
un rayon (Rr) d'une portion d'arc d'extrémité arrière (11r) formée sur une extrémité arrière du corps de conduit (11) est fixé à 50 % ou inférieur et 20 % ou supérieur d'un rayon de l'hélice (3),
le corps de conduit (11) est monté sur la poupe (2) par un moyen de support (12) de sorte qu'une ligne de centre de conduit (Yd) du corps de conduit (11) s'incline dans une direction de rotation de l'hélice (3) par rapport à une ligne de centre d'hélice (Xv) dans une direction verticale de l'hélice (3) dans un état où la coque de bateau (1) est vue de de l'arrière vers l'avant, et
un angle d'inclinaison (θ) de l'hélice (3) dans la direction de rotation est fixé dans un intervalle d'angle de 30° ou supérieur et de 60° ou inférieur dans la direction de rotation de l'hélice (3) par rapport à une partie de la ligne de centre d'hélice (Xv) disposée plus haut que notre axe de centre de l'hélice (3).

4. Conduit de poupe (10) selon la revendication 1 ou 3, dans lequel une section transversale du corps de conduit (11) dans sa direction longitudinale est formée dans une forme d'aile qui est convexe vers l'intérieur du corps de conduit (11).

5. Conduit de poupe (10) selon la revendication 1 ou 3, dans lequel le rayon (Rr) de la portion d'arc d'extrémité arrière (11r) est rendu plus petit qu'un rayon (Rf) d'une portion d'arc d'extrémité avant (11f) formée sur une extrémité avant.

6. Conduit de poupe (10) selon la revendication 1 ou 3, dans lequel un axe de centre fantôme (Xd) du corps de conduit (11) correspond à un axe de centre de rotation (Xp) de l'hélice (3).

7. Conduit de poupe (10) selon la revendication 1 ou 3, dans lequel un axe de centre fantôme (Xd) du corps de conduit (11) est décalé d'un axe de centre de rotation (Xp) de l'hélice (3).

8. Conduit de poupe (10) selon la revendication 1 ou 3, dans lequel un axe de centre fantôme (Xd) du corps de conduit (11) est incliné par rapport à un axe de centre de rotation (Xp) de l'hélice (3) dans un état où la coque de bateau (1) est vue de côté.

9. Conduit de poupe (10) selon la revendication 1 ou 3, dans lequel le corps de conduit (11) est monté, par l'intermédiaire d'une contre-fiche (12a) comme moyen de support (12), sur un tube de poupe de la coque de bateau (1) ou une extrémité de la poupe qui recouvre le tube de poupe.

10. Conduit de poupe (10) selon la revendication 9, dans lequel une section transversale de la contre-fiche (12a) est formée dans une forme d'aile qui est convexe vers l'intérieur du corps de conduit (11).

11. Conduit de poupe (10) selon la revendication 9, dans lequel la contre-fiche (12e) est formée dans une forme torsadée, mettant par-là un refoulement pour l'hélice (3) dans un contre-courant par rapport à la direction de rotation de l'hélice (3).

12. Conduit de poupe (10) selon la revendication 9, dans lequel une largeur avant-à-arrière de côté de corps de conduit (Ly) de la contre-fiche (12a) est formée plus large qu'une largeur avant-à-arrière de côté de poupe (Lx) de la contre-fiche (12a).

13. Attache de poupe montée à l'avant d'une hélice (3) montée sur une poupe (2) d'une coque de bateau (1),
**caractérisée en ce que**
une paire de contre-fiches (12a) qui supportent un corps de conduit fantôme en arc sont montées sur la poupe (2) de sorte qu'un angle entre la paire de contre-fiches (12a) se trouve dans l'intervalle d'angle (β) de 180° à 270°,
un rayon d'une portion d'arc d'extrémité arrière fantôme (11r) formée sur une extrémité arrière du corps de conduit fantôme est fixé à 50 % ou inférieur et 20 % ou supérieur d'un rayon de l'hélice (3),
une ligne de centre de contre-fiche entre la paire de contre-fiches (12a) s'incline dans une direction de rotation de l'hélice (3) par rapport à une ligne de centre d'hélice (Xv) dans une direction verticale de l'hélice dans un état où la coque de bateau (1) est vue de l'arrière vers l'avant, et
un angle d'inclinaison (θ) de l'hélice (3) dans la direction de rotation est fixé dans un intervalle d'angle de 30° ou supérieur à 60° ou inférieur dans la direction de rotation de l'hélice (3) par rapport à une partie de la ligne de centre d'hélice (Xv) disposée plus haut qu'un axe de centre de l'hélice (3).

14. Procédé de configuration du conduit de poupe (10) selon la revendication 1 ou 3, comprenant :
lorsque le conduit de poupe (10) doit être configuré,
une étape fixant un conduit de circonférence entière présentant un rayon identique à celui du corps de conduit d'arc (11) ;
une étape de réalisation d'un calcul de résistance et de simulations d'auto-propulsion de la coque de bateau (1) utilisant le conduit de circonférence entière ;
une étape d'obtention, à partir d'un résultat de calcul des résistance et auto-propulsion, d'une distribution de force hydrodynamique de la direction de propulsion de coque de bateau (1) agissant sur une surface du conduit de circonférence entière et/ou distribution de vitesse d'écoulement • direction d'écoulement à partir de l'arrière du conduit de circonférence entière vers une surface d'hélice ; et
une étape de détermination d'une forme du corps de conduit d'arc (11) à partir du conduit de circonférence entière sur la base de la distribution de force hydrodynamique et/ou de la distribution de vitesse d'écoulement • direction d'écoulement à partir de l'arrière du conduit de circonférence entière vers la surface d'hélice.

15. Procédé de configuration du conduit de poupe (10) selon la revendication 14, comprenant de plus une étape fixant un nombre de montage du moyen de support (12), dans lequel
l'étape de calcul des résistance et auto-propulsion par le calcul de valeur numérique de la coque de bateau (1) est exécutée en utilisant une condition fixée du moyen de support (12).

16. Procédé de configuration du conduit de poupe (10) selon la revendication 14, dans lequel la distribution de force hydrodynamique est une distribution de poussée et une distribution de résistance.

17. Bateau présentant le conduit de poupe (10) selon la revendication 1 ou 3 fourni sur la poupe (2).

18. Bateau présentant le conduit de poupe (10) selon la revendication 17, dans lequel la coque de bateau (1) est un type catamaran à poupe biaxiale.

19. Bateau présentant le conduit de poupe (10) selon la revendication 17, dans lequel la coque de bateau (1) est une coque de bateau existant, et le conduit de poupe (10) est rétroajusté à la coque de bateau (1).
